# EUROPÄISCHE PATENTSCHRIFT

(11) **EP 3 446 816 B1**
(45) Veröffentlichungstag und Bekanntmachung des Hinweises auf die Patenterteilung: **06.11.2019**
(21) Anmeldenummer: 17187111.4
(22) Anmeldetag: 21.08.2017
(51) Int. Cl.: B23B 31/177, B21D 53/30, B23B 5/28, B60B 3/00, B23Q 3/06

(54) **SPANNFUTTER FÜR RÄDER**
COLLET CHUCK FOR WHEELS
MANDRIN DE SERRAGE POUR ROUES

(43) Veröffentlichungstag der Anmeldung: 27.02.2019
(73) Patentinhaber: AMT Makra GmbH, 76694 Forst (DE)
(72) Erfinder: BINNINGER, Felix, 76351 Linkenheim-Hochstetten (DE); TREINAT, Uwe, 76356 Weingarten (DE)
(74) Vertreter: Vossius & Partner Patentanwälte Rechtsanwälte mbB

(56) Entgegenhaltungen:
- EP-A1- 2 101 936
- US-A- 5 820 137

## Beschreibung

Die vorliegende Erfindung betrifft das oberbegrifflich Beanspruchte und bezieht sich somit allgemein auf die Bearbeitung von Rädern, insbesondere von Rohrädern.

Räder für Fahrzeuge sind bekannt. Auf die Räder werden die für ein Fahrzeug bestimmten Reifen aufgezogen und dann werden Räder und Reifen gemeinsam als Komplettrad an den Achsen eines Fahrzeuges montiert. Bereits aufgrund der für unterschiedliche Fahrzeuge erforderlichen unterschiedlichen Durchmesser und unterschiedlichen Breiten der verwendeten Reifen sind eine Vielzahl unterschiedlicher Räderformen und Rädergrößen erforderlich. Zudem ist für viele Fahrzeugbesitzer das Aussehen der Räder von Bedeutung und muss dementsprechend den geschmacklichen Vorstellungen angepasst werden. Dies führt bei der Herstellung von Rädern dazu, dass oftmals Räder in allenfalls kleinen Serien produziert werden müssen und die entsprechenden Herstellungsprozesse und Vorrichtungen für diese kleinen Serien geeignet sein sollen.

Gängig bei der Herstellung von Rädern ist es, Rohräder aus Leichtmetall wie beispielsweise Aluminium oder Magnesium zu gießen und dann die gegossenen Rohräder zu bearbeiten. Die Bearbeitung umfasst typisch neben einer anfänglichen groben Entgratung, die von Hand vorgenommen wird, eine Weiterbearbeitung der Räder, um etwa die Löcher für die Verschraubung der Räder an den Fahrzeugachsen vorzusehen, um in kritischen Bereichen glatte bzw. zum Teil sogar polierte Oberflächen zu schaffen, um die Räder vollständig rund zu drehen und so weiter. Etliche dieser Bearbeitungsschritte werden unter Verwendung von Drehmaschinen durchgeführt. Zu diesem Zweck müssen die Räder zunächst auf einem Spannfutter befestigt werden und können dann, befestigt am Spannfutter, in den Drehmaschinen drehend bearbeitet werden. Am Anmeldetag ohne weiteres üblich sind dabei Umdrehungsgeschwindigkeiten von beispielsweise 2000 Umdrehungen pro Minute.

Die große Vielzahl an unterschiedlichen, unterschiedlich geformten und unterschiedlich dimensionierten Räder führt hinsichtlich des Einspannens der Räder dazu, dass entweder eine große Anzahl unterschiedlicher Spannwerkzeuge erforderlich wird oder aber wenige Spannwerkzeuge so gestaltet werden, dass sie jeweils für viele unterschiedliche Räder verwendbar sind. Letztere Variante ist per se bevorzugt, weil die andernfalls erforderliche sehr große Anzahl unterschiedlicher Spannwerkzeuge nicht nur hohe Material- und Lagerkosten verursacht, sondern gerade auch im Hinblick auf die wie beschrieben häufig notwendige Bearbeitung von kleinen Serien in einem Fertigungsprozess die bei der Fertigung erforderlichen Prozessschritte komplizierter macht, insbesondere durch die Notwendigkeit, das Spannwerkzeug mit hoher Frequenz gegen ein anderes, aktuell benütztes oder benötigtes zu tauschen. Es gibt demgemäß schon Spannfutter für Räder, die prinzipiell erlauben, wahlweise eine Vielzahl unterschiedlicher Räder zu bearbeiten.

Aus der WO 2008/ 087 668 entsprechend der EP 2 101 936 B1 ist bekannt ein Spannfutter zum Zentrieren eines Radfelgenrohlings umfassend: - eine Trägerbasis für die Radfelge, die um eine erste Referenzachse gedreht werden kann, - zumindest zwei Orientierungselemente, die der Basis zugeordnet sind und zum Eingriff mit ersten Orientierungsmitteln dienen, die der Radfelge zugeordnet sind, um ein Zentrieren der Radfelge durch angenäherte Ausrichtung einer zweiten Referenzachse der Radfelge zur ersten Referenzachse der Basis zu erlauben, wobei jedes der zumindest zwei Orientierungselemente so ist, dass es sich in einer jeweiligen radialen Richtung, die das Zentrum auf der ersten Referenzachse hat, um eine Länge erstreckt, die alternativ erlaubt, dass es mit zweiten Orientierungsmitteln in Eingriff steht, die einer weiteren Radfelge zugeordnet sind, deren Typ sich von der Radfelge unterscheidet, und die auf dem Spannfutter zentriert werden kann, wobei zumindest eines der Orientierungselemente eine Rippe in Relief relativ zu der Trägerbasis ist und zur engen Kopplung mit einer jeweiligen Kerbe geeignet ist, die ein passendes Profil hat, das auf einem Umfangsrand der Radfelge vorgesehen ist, wobei das Spannfutter dadurch gekennzeichnet, ist, dass die Rippe in einem Sitz aufgenommen ist, der mit solchen elastischen Mitteln versehen ist, dass auf die Rippe ein Druck ausgeübt wird, um den Eingriff der letzteren mit der jeweiligen Kerbe zu erleichtern.

Aus der US 5,820,137 B1 ist eine Spannvorrichtung bekannt, mit der ein Aluminiumrad in einer Drehbank eingespannt und zentriert werden kann. Die Spannvorrichtung umfasst eine Stirnplatte, die zur Drehung um die Mittellinie angepasst ist, sowie erste, zweite und dritte radiale Gleitblöcke, die in Bezug auf die Mittellinie senkrecht gleitend bewegbar sind und angepasst sind, um Positionierelemente aufzunehmen. Erste, zweite und dritte Klemmen sind um den Umfang der Frontplatte herum gleichmäßig beabstandet und dazu geeignet, auf das Aluminiumrad eine Klemmkraft parallel zur Mittellinie auszuüben. Die Gleitblöcke werden unabhängig von den Klemmen betätigt, um das Zentrieren des Rades vor dem Klemmen zu erleichtern. Die Gleitblöcke sind bezüglich der Mittellinie in einer ersten Richtung radial nach außen und in einer zweiten Richtung radial nach innen beweglich, damit die Positionierelemente mit dem Rad in Eingriff kommen.

Aus der DE 20 2008 013 825 U1 ist etwa eine Vorrichtung zum Einspannen eines zu bearbeitenden Werkstückes an einer kreisförmigen Auflager- und Bezugsfläche bekannt, umfassend einen ringförmigen Grundkörper, der auf seinem Umfang um jeweils 120° voneinander beabstandete Klemmorgane trägt, von denen jedes aus einem Lagerteil zur Abstützung der Auflager- und Bezugsfläche des Werkstücks und einem Klemmkopf besteht, wobei das Lagerteil eine ortsfeste Stützschale mit einer konkaven, teilzylindrischen Lagerfläche aufweist, in der eine entsprechende teilzylindrische Wippe für die Aufnahme der Auflager- und Bezugsfläche des Werkstücks schwenkbar aufliegt, wobei die Lagerachsen aller teilzylindrischen Lagerflächen und der teilzylindrischen Wippen in einer zur Auflager- und Bezugsfläche parallelen Ebene liegen und radial zur vertikalen Mittelachse des ringförmigen Grundkörpers ausgerichtet sind. Bei den zu bearbeitenden Werkstücken handelt es sich insbesondere um Räder.

Die bekannte Anordnung will eine exakte, zur Auflagerfläche planparallele Aufnahme des Werkstücks gewährleisten, damit die spanende Bearbeitung und Nachbearbeitung einer gegenüberliegenden Oberfläche des Werkstücks fehlerfrei durchgeführt werden kann. Sie ist jedoch in der Praxis nicht ohne Probleme. Vor allem bei Variationen in dem Rohrad ist es schwierig, beim Spannen (jedenfalls automatisch) zu gewährleisten, dass ein abgelegtes Rad auch korrekt gespannt wird.

Das Spannen erfolgt im Übrigen typisch am Spannrand, der zusammen mit dem Rad gegossen wird, damit das Rad während der (drehenden) Bearbeitung daran fixiert werden kann. Erst danach wird das Rad im Regelfall umgedreht und dann von seiner Ansichtsseite her bearbeitet. Dies kann insbesondere die Entfernung des Spannrandes vom Rad umfassen, so dass gegebenenfalls das frühere Vorhandensein eines Spannrandes an der fertigen Rad gar nicht unbedingt sofort zu erkennen ist. Durch Spannrandvariationen kann auch variieren, wie das Rad gespannt wird, was bei der Fertigungspräzision Probleme bereiten kann.

Ein weiteres Problem bei der vorbekannten Vorrichtung zum Einspannen ist die so genannte Designüberhöhung von Rädern. Räder werden typisch nahe ihres Mittelpunktes an der Radachse befestigt. Nach radial außen führen Speichen oder dergleichen, die zum Teil beim montierten Rad noch weiter axial der Radachse nach außen erstreckt sind als etwa der Felgenrand, auf dem der Reifen aufsitzt. Diese oftmals aus rein optischen Designgründen gewählte Gestaltung wird als Designüberhöhung bezeichnet. Nun ist in der vorbekannten Anordnung eine stufenförmige Auflagerung gegeben, wobei die Räder mit kleinstem Radius am niedrigsten über der Grundkörperfläche angeordnet sind. Dies beschränkt für kleine Räder die maximal zulässige Designüberhöhung. Prinzipiell wäre es zwar möglich, auch bei der vorbekannten Anordnung große Designüberhöhungen zuzulassen, nämlich indem die Auflagerung einfach hinreichend weit oberhalb des Grundplattenkörpers erfolgt. Dies jedoch hat negative Folgen in jenen Fällen, bei welchen die vorbekannte Anordnung nach DE 20 2008 013 825 U1 dazu verwendet werden soll, besonders große Räder - entsprechend der stufenförmigen Ausbildung der Auflagerung weiter oben - aufzulagern. Dies wiederum führt in der Drehmaschine aufgrund der dort wirkenden Kräfte beispielsweise zu unerwünschten Vibrationen, einem zu hohen Schwerpunkt und zu geringer Steifigkeit, was die Bearbeitung der Räder per se beeinträchtigt. Dies ist zudem besonders kritisch, weil Räder immer dünner und somit auch instabiler werden. So haben etwa moderne Räder eine Wanddicke von nur noch 2 mm oder darunter; werden derart dünne Räder noch aufgelagert und dann weit entfernt von den Auflagerpunkten bearbeitet, führt dies eher zu unerwünscht starken Vibrationen usw. Ein weiterer Nachteil einer zu hohen Auflagerung besteht, weil der maximale Verfahrweg einer Drehmaschine beschränkt ist; eine zu hohe Auflagerung kann insoweit dazu führen, dass bestimmte, insbesondere zu breite Räder nicht mehr wie gewünscht bearbeitet werden können.

Zudem kann es vorkommen, dass ein modernes Rad gerade aufgrund der modernen, nämlich dünnen Wandausbildung nach falschem Einspannen nicht mehr, jedenfalls nicht mehr ohne weiteres, verwendet werden können. Wenn Räder besonders geringer Wanddicke nämlich nicht genau genug oberhalb jener Stellen fixiert werden, an welchen sie auflagern, sondern eine Auflagerung an einer zwar vergleichbar großen Stelle, aber vom gedachten Auflagerungsort entfernt erfolgt, kann dies dazu führen, dass sich das gesamte Rad während eines Bearbeitungsprozesses vollständig bis zur Unbrauchbarkeit deformiert. Dies wird zudem in der Regel nicht während des Drehens bemerkt, sondern erst nach dem Lösen des Spannwerkzeuges.

Es ist daher wünschenswert, ein Spannfutter für Räder so auszubilden, dass es Räder in einer Vielzahl unterschiedlicher Größen ohne Probleme spannen kann, auch wenn die Räder dünn sind. Die Räder unterschiedlicher Größe werden typisch genormt sein und es ist wünschenswert, eine für wenigstens drei unterschiedliche Norm-Zollgrößen ausgelegte Spannanordnung zu schaffen. Es sei diesbezüglich darauf hingewiesen, dass es bei Dreh- oder Fräsmaschinen oftmals bereits Probleme geben kann, weil die unterschiedlichen Größen auch zumindest zum Teil unterschiedliche Dreh- bzw. Fräs- und/oder Bearbeitungswerkzeuge erfordern können. Es ist daher oftmals ausreichend, drei unterschiedliche Größen bedienen zu können. Es ist insoweit möglich, das Spannfutter für mehr als drei unterschiedliche Zollgrößen auszulegen, jedoch nicht zwingend erforderlich. Der Grund hierfür liegt darin, dass die unterschiedlichen Größen zu bearbeitender Räder mit einer größeren Vielfalt an erforderlichen Werkzeugen einhergehen, was im Regelfall bei herkömmlichen Drehmaschinen bereits Änderungen erforderlich macht.

Ein weiteres technisches Problem ergibt sich daraus, dass die Spannwerkzeuge, mit welchen das Rad eingespannt wird, den bei der Bearbeitung erheblichen Fliehkräften gewachsen sein müssen.

Es ist also insgesamt wünschenswert, die Einspannmöglichkeiten für Räder bei deren Bearbeitung zumindest zum Teil zu verbessern und wenigstens einen Teil der aufgezeigten Probleme zumindest partiell zu lindern.

Die Aufgabe der vorliegenden Erfindung besteht darin, Neues für die gewerbliche Anwendung bereitzustellen.

Die Lösung dieser Aufgabe wird in unabhängiger Form beansprucht. Bevorzugte Ausführungsformen finden sich in den Unteransprüchen.

Gemäß einem ersten Aspekt der vorliegenden Erfindung wird somit ein Spannfutter für Räder mit Zentrier- und Spannmitteln vorgeschlagen, die dazu ausgebildet sind, zur Zentrierung und zum Spannen gegen ein beliebiges Rad aus einer Reihe von Rädern unterschiedlicher Größe bewegt zu werden, wobei die Zentriermittel mehrere entlang des Umfangs verteilte, quer dazu an das Rad bewegliche Zentrierfinger aufweisen, die Spannmittel mehrere, die Räder nach unten pressende Spannfinger und darunter mehrere, den Spannfingern zugeordnete, zur Unterstützung des Räderrandes gegen den Spannfingeranpressdruck ausgebildete Auflagerbereiche aufweisen, und eine Kopplung vorhanden ist, die dazu ausgebildet ist, im Ansprechen auf die Zentrierung die Auflagerbereiche an den zu unterstützenden Räderrandbereich heran zu führen.

Es wurde somit erkannt, dass es möglich ist, durch die Koppelung an die Zentrierung Auflagerbereiche an jene Bereiche des Räderrandes heranzuführen, wo das Rad zu unterstützen ist. Dies erlaubt einerseits eine kleinflächige Unterstützung am Räderrand, die insbesondere dicht bei den Spannfingern erfolgen kann. Die Spannfinger können so am Räderrand, einer Schulter auf den Rädern oder dergleichen aufsitzen und der von ihnen nach unten, d.h. auf eine Basisplatte des Spannfutters ausgeübte, die Räder fixierende Druck wird durch die Bewegung der Auflagerbereiche praktisch direkt unter den Spannfingern abgeführt.

Die zugleich durch die Bewegung der Auflagerbereiche ermöglichte nur kleinflächige Unterstützung des Räderrandes bedingt, dass auch designüberhöhte Räder, die beispielsweise zur Räderachse hin sich nach fahrzeugaußenseitig weg von der Radachse über die Kotflügel hinaus wölbende Speichen aufweisen, ohne weiteres aufgenommen und gespannt werden können. Es sei erwähnt, dass sich die Designüberhöhung auf eine solche Wölbung "nach axial außen" bezieht, wohingegen sich ansonsten, wie jeweils leicht aus dem Zusammenhang ersichtlich, "innen" und "außen" im Regelfall auf die radiale Entfernung vom Rädermittelpunkt bezieht.

Da die Koppelung im Ansprechen auf die Zentrierung erfolgt, ist es ohne weiteres möglich, beim Heranführen der Auflagerbereiche an die jeweiligen Bereiche des Radrandes dafür Sorge zu tragen, dass die Auflagerbereiche sich entsprechend der Bewegung der Zentrierfinger bewegen. Dies kann simultan mit der Bewegung der Zentrierfinger geschehen, was eine besonders einfache, insbesondere mechanische Kopplung erlaubt; alternativ wäre es auch möglich, zunächst die Zentrierfinger an das Rad heran zu bewegen und dann, nachdem dies erfasst wurde, entsprechend der vorgenommenen Zentrierung die Auflagerbereiche zu bewegen.

Es ist bevorzugt, wenn die quer zum Umfang des Rades beweglichen Zentrierfinger bei der Zentrierbewegung von innen nach außen bewegt werden, insbesondere mit hoher Genauigkeit radial. Abweichungen hiervon sind aber möglich. Es sei insoweit erwähnt, dass es nicht zwingend ist, die Zentrierfinger exakt radial nach außen zu bewegen; so kann die Bahn z.B. um bis zu 10° abweichen, bevorzugt allerdings nicht mehr als 5%. Dies kann Vorteile bieten bei der Auslegung anderer Elemente, weil damit die Platzverhältnisse im Inneren der hohlen Spannfutterbasisplatte anders gestaltet werden können, die Bahn für den Kopplungsring verändert werden kann usw. Eine weitgehend oder vollständig exakt lineare Bewegung insbesondere auch exakt radial nach außen bietet dabei zwar insofern Vorteile, als die entsprechenden, die Bewegung bewirkenden Elemente besonders einfach gebildet werden können; gleichwohl wäre es jedoch auch möglich, die lineare Bewegung schräg gegen einen Radius zu gestalten und/oder anstelle einer linearen Bewegung eine Zentrierfingerbewegung vorzusehen, die einen Bogen oder eine andere Kurve bzw. schreibt. Eine Radialbewegung von innen nach außen ist allerdings insofern besonders vorteilhaft, als das Spannfutter mit eingespanntem Rad in der Bearbeitungsmaschine mit hohen Drehzahlen gedreht wird, was Fliehkräfte auf die Zentrierfinger nach außen bewirkt und somit dort, wo die Zentrierfinger unter den ganz erheblichen wirkenden Kräften zu einer Bewegung neigen, allenfalls eine Verstärkung der zentrierenden Kräfte bewirkt wird.

Zur Zentrierung des Rades auf dem Spannfutter sind einige wenige Zentrierfinger ausreichend. In einer bevorzugten Variante brauchen lediglich drei Zentrierfinger vorgesehen sein. Diese können äquidistant um den Umfang herum angeordnet werden. Mit drei Zentrierfingern lässt sich schon problemfrei eine gute Zentrierung erreichen und die für die Bewegung des Rades in die zentrierte Lage erforderlichen Kräfte ohne weiteres aufbringen. Dort, wo besonders große und/oder besonders schwere Räder gespannt werden sollen, können entweder stärkere Zentrierfinger mit einer massiveren, Zentrierfinger bewegenden Mechanik vorgesehen werden und/oder es können mehr Zentrierfinger vorgesehen werden. Es wird einsichtig sein, dass die Anzahl an Zentrierfingern bevorzugt niedrig gehalten wird, um so auch die Anzahl bewegter Teile gering zu halten und das Spannfutter dadurch einfach und stabil gestalten zu können. Es sei auch darauf hingewiesen, dass die Zentrierfinger nicht exakt äquidistant angeordnet werden müssen. Per se bietet eine äquidistante Anordnung zwar schon deshalb Vorteile, weil es das Auswuchten des Spannfutters vereinfacht. Es ist aber ohne weiteres möglich, dass etwa eine nicht zentral angeordnete Pneumatikfluidkupplung mit entsprechenden, intern im Spannfutter geführten Leitungen usw. ohnehin zu einer Asymmetrie führen könnte. Die dadurch an der Basis bedingte Unwucht könnte dann insbesondere durch eine gerade nicht äquidistante Verteilung entlang des Umfanges (teil)kompensiert werden. Es sei darauf hingewiesen, dass andere Gründe bestehen könnten, die Zentrierfinger abweichend von einer Äquidistanz zu verteilen. Hierzu kann beispielsweise auch gehören, dass zwischen den einzelnen Fingern und anderen Elementen des Spannfutters genügend Platz bleiben soll, um etwa an ein stillstehendes, eingespanntes Rad geeignete Messinstrument heranzuführen und so weiter.

Die spannenden bzw. zentrierenden Mittel müssen auf das zu spannende Rad hinreichend große Kräfte ausüben, die es erlauben, das Rad auch unter schneller Rotation bzw. unter den bei der Bearbeitung der Drehmaschine wirkenden Kräften sicher zu fixieren. Daher ist es bevorzugt, wenn zumindest ein Teil der beweglichen Elemente des Spannfutters, insbesondere die Zentrierfinger und/oder die Spannfinger, durch Aktoren bewegt werden, insbesondere solche, die durch Druckfluid betätigt werden. In einer besonders bevorzugten Variante wird also ein Anschluss für die Verbindung mit einer Druckluftquelle vorhanden sein. Wo dies der Fall ist, ist es bevorzugt, dass die entsprechende Kupplung mit einer Dichtung versehen ist, um den Druck des Fluides nach Abkoppelung des Spannfutters von der Fluidruckquelle zu halten und somit eine Bewegung der Zentrierfinger bzw. der Spannfinger aus der Zentrier- bzw. Spannlage heraus zu verhindern.

Es ist bevorzugt, wenn das Spannfutter für Räder von wenigstens drei unterschiedlichen Normgrößen ausgebildet ist. Beispielhaft können Spannfutter für Räder der Größe 15 Zoll, 18 Zoll und 21 Zoll bzw. 18 Zoll, 21 Zoll und 24 Zoll ausgelegt sein. Im Regelfall werden die Spannmittel, die Zentriermittel und die Auflagerbereiche kontinuierlich beweglich sein. Dies führt dann dazu, dass alle Zwischengrößen ordnungsgemäß zentriert und gespannt werden können. Es sei erwähnt, dass das eigentliche Spannen am Räderrand beispielsweise am sogenannten Felgenhorn erfolgen kann, gegebenenfalls aber auch auf einem separaten, zwecks Fixierung des Rades während seiner Fertigbearbeitung in einer Drehmaschine vorgesehenen Spannrand.

In einer besonders bevorzugten Variante sind die Zentrierfinger nahe der Enden von Ablegekeilen angeordnet, die unter einem auf den Keilen abgelegten Rad nach außen beweglich sind. Diese Keile sind dann bevorzugt so geneigt, dass sie von radial außen nach radial innen abfallen, sich also dann, wenn die Keile nach außen bewegt werden, das Rad der unter ihm befindlichen Spannfutterbasisplatte nähert. Auf diese Weise wird erreicht, dass ein auf den Ablegekeilen angeordnetes Rad nicht nur zentriert wird, indem die Zentrierfinger am Innenrand des Rades oder an anderer geeigneter Stelle angreifen, sondern dass das Rad auch nach unten abgelegt werden kann, insbesondere auf den Auflagerbereichen und somit auf räderdurchmesserunabhängiger Höhe über einer Spannfutterbasisplatte.

Die Bewegung der Zentrierfinger kann insbesondere dann, wenn sie an Ablegekeilen vorgesehen sind, dadurch erreicht werden, dass eine erste, schräg zur Spannfutterbasisplatte stehende Gleitfläche radial nach innen gezogen wird, wobei die nach innen gezogene schräge Gleitfläche innerhalb einer Spannfutterbasis angeordnet ist und wobei auf der schrägen Gleitfläche ein zweite Gleitfläche aufsitzt, die wiederum eine Säule trägt. Diese Säule wird an einer festen Stelle auf- und abbeweglich angeordnet sein, wodurch die Bewegung der ersten Gleitfläche sie nach unten absenkt. Wenn diese absenkbare Säule am entgegengesetzten Ende eine dritte Gleitfläche trägt, die wiederum gegen die Spannfutterbasisplatte geneigt ist, kann mit einer vierten damit gepaarten Gleitfläche an einem horizontal beweglichen Element die Zentrierfingerbewegung erreicht werden. Es brauchen im übrigen die Gleitflächen nicht wie dargestellt eben sein. Mit zwei Paaren gegenläufig geneigter, aufeinander aufgleitender Flächen kann also eine Bewegung der Zentrierfinger zu bewirken, mag mechanisch komplizierter erscheinen als die direkte pneumatische Bewegung der Zentrierfinger nach außen; eine solche Anordnung trägt aber dazu bei, dass unter den erheblichen, bei der Benützung des Spannfutters in der Drehmaschine wirkenden Kräften keine Rückstellung oder weitere Verstellung erfolgt. Vielmehr wirken Fliehkräfte beidseits der senkrecht zur Spannfutterbasis beweglichen Säule nach außen, was z.B. verhindert, dass durch übermäßige Kräfte der Zentrierfinger auf die Zentrierflächen eine unerwünschte Deformation auftritt. Es wird insoweit einzusehen sein, dass die beidseits der Anordnung angreifenden Fliehkräfte eher zu einem leichten und daher leicht reversiblen und somit insgesamt sogar angelegentlich durchaus erwünschten Verklemmen bzw. Verkanten führen. Es ist im übrigen möglich, die Orientierung der Gleitflächen per se anders zu wählen, etwa, um durch eine Orientierung der Aktoren tangential statt radial im Zentrum Platz zu sparen oder ähnliches. Die hier beschriebene Bauart mit zwei relativ zueinander und in der Spannfutterbasisplatte drehbaren Platten hat zudem den Vorteil, dass vorgefertigte Module verwendet werden können, die einerseits in Spannfutterbasen unterschiedlicher Größe verwendbar sind und andererseits auch Reparaturen erleichtern.

Das Vorsehen zweier Gleitkeilpaare mit einer dazwischen angeordneten, senkrecht zur Spannfutterbasis beweglichen Säule ist insofern besonders bevorzugt, um die Spannfinger zu bewegen.

Es ist vorteilhaft, wenn die Auflagerbereiche, auf denen das Rad gegen den Spannfingeranpressdruck unterstützt wird, vergleichsweise kleinflächig ist. Je nach Breite des Räderrandes bzw. Felgenhornes oder anderer Auflagerfläche, Anzahl der Spannfinger usw. sind Größen von 15 x 15 mm bzw. beispielsweise 15 mm Durchmesser völlig ausreichend. Bei typischen Rädern werden die reinen Auflagerflächen sogar jeweils nicht mehr als 5 mm x 10 mm betragen. Es sei darauf hingewiesen, dass gegebenenfalls die Auflagerbereiche so gebildet sein können, dass ein einzelner Finger mittig zwischen zwei Einzelflächen aufsetzt, was bei nicht zu großem Abstand der entsprechenden kleinen Auflagerflächen ebenfalls zu einer Auflagerung führt, die eine Räderranddeformation bzw. eine Deformation des gesamten Rades noch sicher zu verhindern vermag. Dieser Auflagerbereich wird typisch am Ende einer über einer Spannfutterbasisplatte sich erhebenden Säule oder dergleichen gebildet sein, so dass ein designüberhöhtes Rohrad die Basisplatte nicht radial innen berührt. Da die Höhe dieser Säule, auf der abgelegt wird, für alle Räderdurchmesser gleich ist, ergibt sich eine gleichbleibend hohe Stabilität während der Bearbeitung.

Die Auflagerung auf der Oberseite eines vergleichsweise kleinflächigen, typisch quader-, zylinder- trapez- bzw. blockförmigen Auflagerbereich bietet unter anderem dort Vorteile, wo ein tatsächlicher Auflagerungspunkt der Rohräder aufgrund von Serie zu Serie ungenormter Nuten und/oder innerhalb einer Serie auftretender Gussvariationen vom gewünschten Auflagerungspunkt abweicht. Es wird dabei im Übrigen eine Höhe des Blockes über der Stirnfläche einer ihn tragenden Säule oder anderen Struktur von 3mm als besonders bevorzugt angesehen. Dies lässt gussbedingte Variationen zu, ist aber noch mechanisch hinreichend stabil. Blockhöhen zwischen 1,5mm und 6mm sind insoweit bevorzugt.

Während es prinzipiell möglich wäre, je Spannfinger mehr als einen Auflagerbereich vorzusehen, beispielsweise, weil ein Spannfinger mittig zwischen zwei Auflagerbereichen, die dicht beieinander angeordnet sind, angreift und/oder alternativ zwei Spannfinger aus unterschiedlichen Richtungen an einen Auflagerbereich heran zu bewegen, wird es besonders bevorzugt, wenn je Spannfinger genau ein Auflagerbereich vorhanden ist. Dies erleichtert und vereinfacht den mechanischen Aufbau; es sei insoweit darauf hingewiesen, dass es auch bevorzugt ist, die jeweiligen Spannfinger-/Auflagerbereichanordnungen auf ein und demselben Spannfutter möglichst identisch zu machen, was einsichtigerweise Reparaturen erleichtert, Lagerhaltung bei der Fertigung vereinfacht und so weiter.

Die Auflagerbereiche sollen bevorzugt unmittelbar unter den Spannfingern befindlich sein, wenn diese ein Rad festspannen. Wie aus dem Vorstehenden bereits ersichtlich, ist es jedoch möglich, den Auflagerbereich leicht seitlich entlang des Umfanges und/oder geringfügig radial nach innen oder außen zu versetzen, ohne dass dadurch bleibende Deformationen an dem Rad zu befürchten sind. Dieser Versatz ist aber bevorzugt nicht größer als 1/100 des Abstandes der Spannfinger zueinander, bevorzugt deutlich geringer, insbesondere nicht größer als 1/200. Dies erlaubt insbesondere eine Auflagerung auf zwei dicht benachbarten Stellen mit dazwischen aufpressendem Spannfinger.

Die Kopplung ist bevorzugt als mechanische Kopplung realisiert. Prinzipiell wäre dies nicht zwingend erforderlich. Es wäre stattdessen z.B. auch möglich, die Zentrierung etwa mit Sensoren festzustellen, d.h. festzustellen, wo die Zentrierfinger nach erfolgter Zentrierung liegen bzw. dass überhaupt eine Zentrierung erfolgt ist. Dann könnte eine formindikative Größe des Rades wie der Durchmesser, die Form des Felgenhorns usw. bestimmt werden und es könnte dann im Ansprechen auf die Zentrierung eine Bewegung der Auflagerbereiche an den zu unterstützten Radrandbereich erfolgen, was gegebenenfalls durch elektromechanische Aktoren oder dergleichen der Fall sein könnte. Eine solche Anordnung mit Sensoren, elektromotorischen Aktoren usw. führt jedoch dazu, dass das Spannfutter vergleichsweise komplex aufgebaut ist, Steuereinheiten usw. elektronisch realisiert werden müssen und im Übrigen die entsprechenden Mittel auch hinreichend stabil gegen die bei Benützung des Spannfutters in der Drehmaschine auftretenden Kräfte ausgelegt sein müssen. Bevorzugt ist daher in jedem Fall eine mechanische Kopplung zwischen einerseits den Zentriermitteln bzw. dessen Zentrierfingern und andererseits den Auflagerbereichen. Eine Möglichkeit, ein solches Kopplungsmitteln zu realisieren, besteht aus einem (hier: insbesondere planen) Ring, der bei bevorzugt jedem der bevorzugt pneumatisch bewegten Zentrierfinger eine geeignet geformte Ausnehmung besitzt, in welche ein Stift eindringt, welcher fest an die Zentrierfinger gekoppelt ist. Bei Bewegung kann er einer solchen Bahn folgen, dass die radiale Hin- und Herbewegung der Zentriermittel mit einem Drehen des Kopplungsringes auftritt, weil sich der Stift in der Ausnehmung hin und her bewegt. Die Bahn kann als gekrümmtes Langloch gebildet sein, über welches der Stift beidseits übersteht. Es sei erwähnt, dass, falls gewünscht, anstelle eines von einem Stift durchdrungenen Langlochbahn andere Möglichkeiten der Führung bzw. Kopplung bestehen, etwa das Eindringen eines Stiftes in eine langgestreckte Eintiefung. Anstelle eines Kopplungsringes kann auch eine Scheibe oder Platte verwendet werden. Eine solche Anordnung wird, ringförmig oder nicht, als Kulissenscheibe bezeichnet. Die Kulissenscheibe kann mehrere, trennbare oder getrennte Segmente umfassen, z.B. wenn bestimmte Spannfinger/Zentrierfingergruppen separat bewegt werden sollen. Typisch werden aber alle Zentrierfinger und alle Auflagenbereiche gemeinsam mit einer einzigen solchen Platte bzw. einem einzigen solchen Ring gesteuert. Es ist möglich, entweder einen oder alle von Zentrierfinger oder einen oder alle der Auflagebereiche direkt anzutreiben und dann die entsprechende Bewegung über die Kopplungsscheibe an das andere von Auflagebereich und Zentrierfinger zu übertragen; alternativ und sogar bevorzugt ist es jedoch, wenn die Platte bzw. Scheibe selber bewegt wird und beide, Zentrierfinger und Auflagebereich jeweils entsprechend bewegt werden; dies ist bei Ausbildung der Platte mit zwei Kulissenbahnen bzw. Kulissenausnehmungen für Steuerfinger, Steuernocken oder dergl. die ihrerseits mit den Zentrierfingern und Auflagebereichen verbunden sind, ohne weiteres möglich. Damit kann eine rein mechanische, sehr stabile Anordnung erhalten werden, die auch den hohen Fliehkräften beim Drehen sowie Stößen während der gesamten Bearbeitung von Rohrädern gut widersteht.

Es wird über die Kopplung zunächst eine Drehung des Kopplungsringes übersetzt in eine allgemein radial erfolgende Bewegung des Zentriermittels. Dies wiederum kann etwas entfernt von dem Zentriermittel dazu herangezogen werden, die Auflagerbereiche zu bewegen. Eine besonders vorteilhafte, einfache Anordnung ergibt sich, wenn die die Auflagerbereiche tragende Säule auf einer relativ zur Spannfutterbasis drehbaren Platte angeordnet ist und die Säule selbst wiederum drehbar darauf befestigt ist. Die Säule selbst kann wiederum drehbar auf dieser drehbaren Platte angeordnet sein, was es erlaubt, durch die zwei simultan ablaufenden Drehungen von Säule und deren Trägerplatte einen besonders kleinen, auch und gerade von einer runden Form abweichenden Auflagerbereich, beispielsweise einen viereckigen Auflagerbereich wie erforderlich, also z.B. allgemein quer zum Umfang auszurichten. Damit ergibt sich einerseits eine einfache mechanische Ausbildung und andererseits kann der Auflagerbereich, was erwünscht ist, sehr klein gehalten werden, bietet aber dennoch auch unter unregelmäßig geformten Rändern eine gute Auflagerung. Es sei erwähnt, dass eine Kulissenbahn für die Auflagerung bei den typisch besonders wichtigen Normgrößen Haltebereiche aufweisen kann, was bevorzugt ist.

Es sei erwähnt, dass die Spannfinger bevorzugt unter Schwenken nach unten auf dem Rad in Anlage gebracht werden.

Es ist vorteilhaft, wenn bei einem Spannfutter zumindest einem Zentrierfinger wenigstens ein Fliehgewicht zugeordnet ist, das bevorzugt abhängig von der radialen Zentrierfingerpositionierung aus einer Ruheposition in eine aktive Position bewegt wird. Dazu kann das Fliehgewicht auf einem Anschlag oder einer Stütze gegen Fliehen auflagern, bis es mit einem sich radial nach innen bewegenden, an die Zentrierfingerbewegung nach radial außen gekoppelten Mitnehmerelement in Kontakt tritt.

Besonders bevorzugt ist es, wenn ein Spanfutter das Spannen mangelhaft zentrierter Räder verhindert, bevorzugt durch Erkennen einer bei Fehlauflage auftretenden Druckverlust eines an das Spannfutter angelegten Druckfluiddrucks. In einer bevorzugten Variante wird das Spannfutter pneumatisch betätigt. Dann kann in der bzw. jeder Auflagerfläche eine kleine Öffnung vorgesehen sein, die von einem ordnungsgemäß aufliegenden Rohrad bzw. dem Spannrand desselben überdeckt wird. Bei Überdeckung wird ein Entweichen von Druckluft allenfalls in minimalem Umfang möglich sein.

Ist die Öffnung hingegen nicht überdeckt, wird Druckluft entweichen können, was zu einem mess- und merkbaren Druckabfall in der Druckfluidzufuhr führen wird und somit für ein automatisches Erkennen ausreicht. Es ist möglich, derartige Löcher in der Auflagerung so vorzusehen, dass einerseits der Druckabfall noch gut erfassbar ist. Dazu müssen die Löcher und die zu diesen führenden Bohrungen hinreichend groß dimensioniert sein. Andererseits können die Löcher und Bohrungen zugleich noch so klein gehalten werden, dass Druckkolben, die zur Bewegung der Zentrierfinger dienen, diese zunächst noch in eine Zentrierlage ziehen werden; erst wenn durch ein zentriertes Rad so viel Widerstand geleistet wird, dass sich der oder die Druckkolben nicht weiter bewegen, wird dann Luft entweichen, sofern kein ordentlich zentriertes Rad aufliegt. Gleiches gilt für eine Situation, in welcher kein Rad aufliegt und deswegen die druckfluidbetätigten Zentrierfinger respektive die diese betätigenden Druckkolben in ihre Endstellung fahren. Sobald eine solche Endlage erreicht ist, wird durch die in den Auflagern bevorzugt vorgesehenen Ausströmlöcher so viel Luft ausströmen, dass ein signifikanter Druckabfall auftritt. Damit kann ein nicht ordnungsgemäßes Spannen ohne weiteres detektiert werden. Dass andere Methoden möglich sind, um ein nicht ordnungsgemäßes Spannen zu erfassen, sei erwähnt.

Die Erfindung wird im Folgenden nur beispielsweise anhand der Zeichnungen beschrieben. In dieser ist dargestellt durch:
- Figur 1: ein Spannfutter für Räder in Draufsicht;
- Figur 2: das Spannfutter von Figur 1 mit einem aufgesetzten Rad;
- Figur 3: ein Teil des Spannfutters von Figur 1 mit aufgesetztem Rad in einer Seiten-Ansicht, in welcher die Wechselwirkung zwischen Zentrierfingern und Rad erkennbar ist;
- Figur 4: eine schematische Veranschaulichung des Antriebes der Zentriermittel;
- Figur 5: eine perspektivische, zum Teil geschnittene Veranschaulichung der Spannfinger;
- Figur 6: eine Draufsicht auf einen Bereich eines Teils des Spannfutters von oben, wobei in
- Figur 6a: sich Spannfinger, Auflagerbereich und Zentriermitte bewegt haben und im Übrigen nicht nur eine etwas andere Perspektive gewählt ist, sondern etwas andere Bauteile erkennbar und andere weggelassen sind;
- Fig. 7: eine perspektivische Ansicht zweier, entlang des Umfangs angeordneter Zentrierfinger mit der zugehörigen Mechanik zur Zentrierfingerbewegung, der Kulissenscheibe in welche Mitnehmerstifte des Zentriermittels eingreifen, und der mit dem Unterteil des Zentriermittels in Eingriff bringbaren Fliehgewichte.

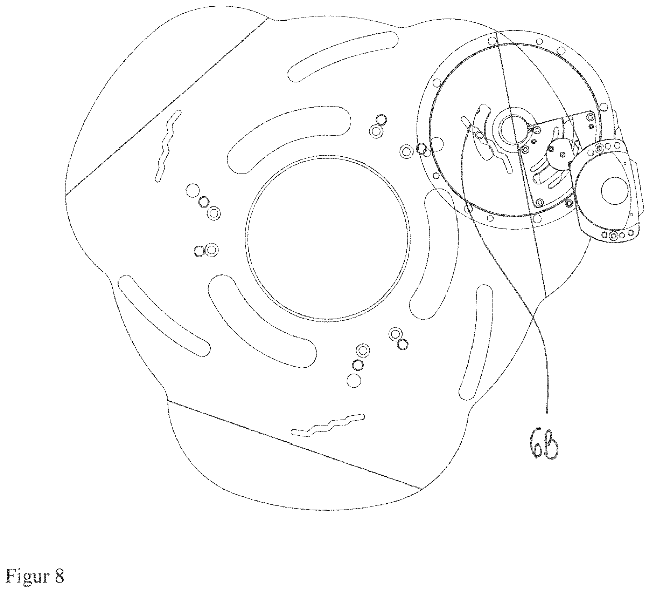

- Fig. 8: eine Innenansicht des Spannfutters von unten mit angedeuteter Kulissenscheibe.
- Fig. 9: eine perspektivische Ansicht von Innenteilen des Spannfutters, unter anderem zum Antrieb der Kulissenscheibe;
- Fig. 10a: eine teilperspektivische Ansicht des Spannfutterinneren von unten mit auf die Kulissenscheibe am Ort der Auflagerungsmechanik mit der für unterschiedliche Radien des Rohrades zur Bildung von Haltepunkten gestuften Kulissenbahn und mit durch die Kulissenscheibe dringenden Elementen zur Verhinderung unerwünschter Drehungen von Elementen bei der Bewegung;

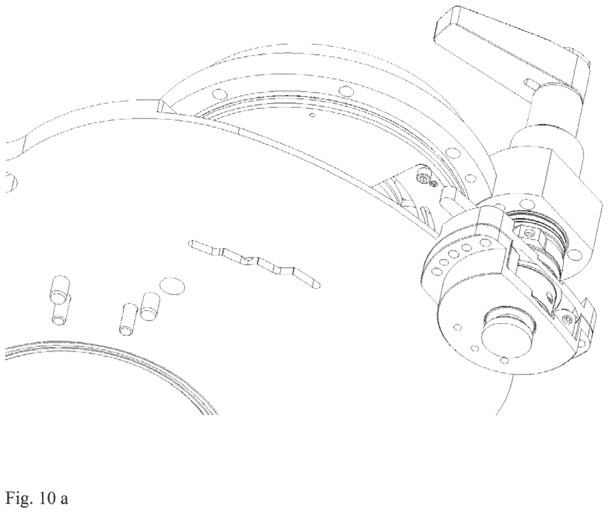

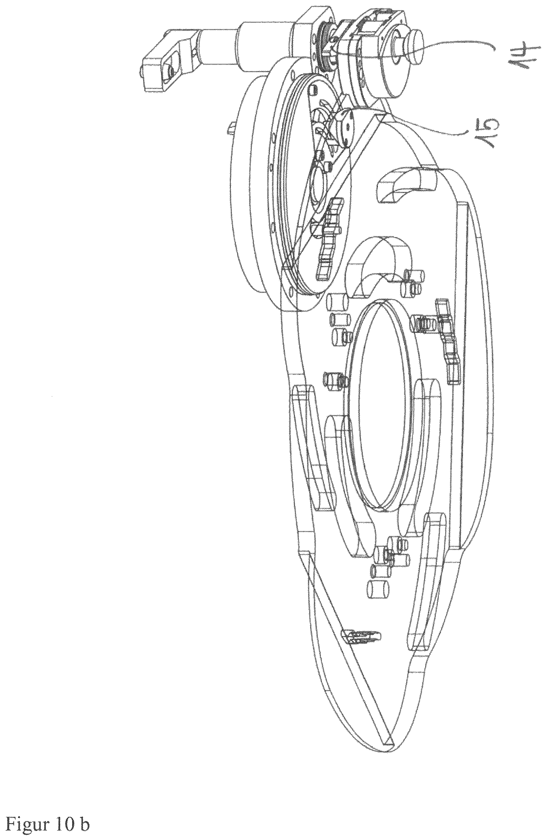

- Fig. 10 b: eine weitere Ansicht wie in Fig. 10a aus einer etwas anderer Perspektive, wobei insbesondere zu erkennen ist, wie eine ungewollte Drehung der Auflagerfläche durch eine Ankopplung an die Kulissenscheibe vermieden wird;

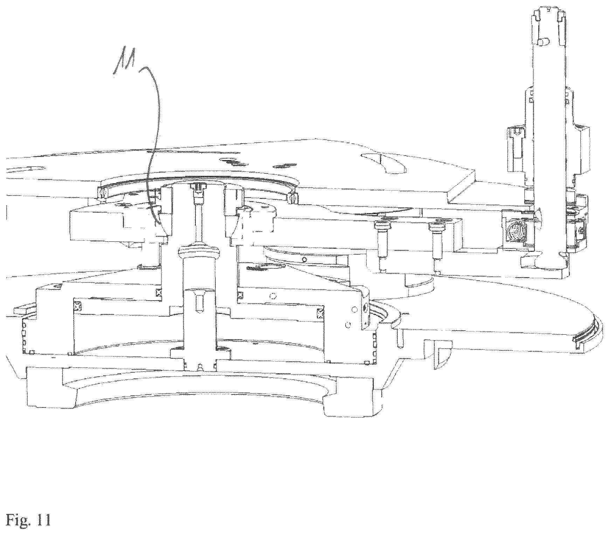

- Fig. 11: eine teilweise geschnittene Ansicht durch einen Spannfinger und die ihm zu seiner Bewegung zugeordnete Ziehscheibenanordnung.

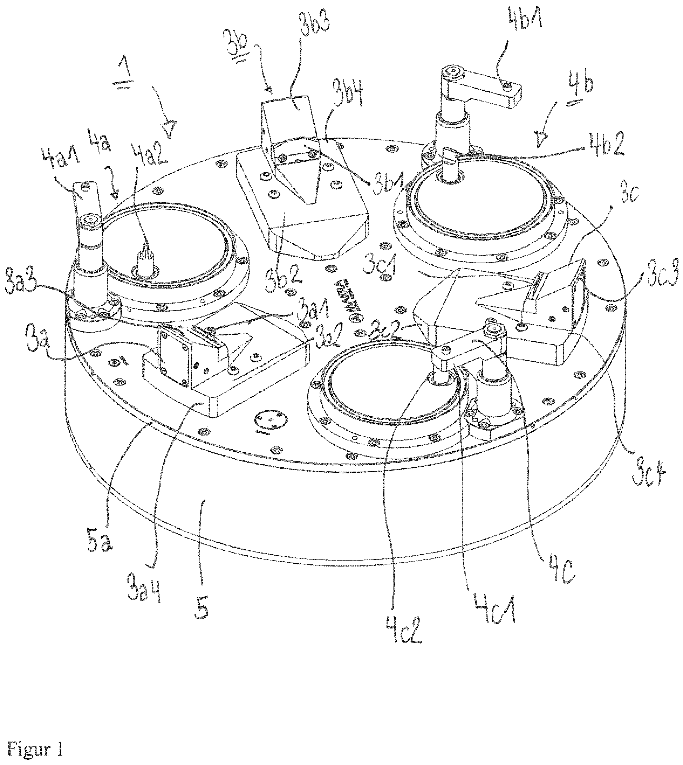

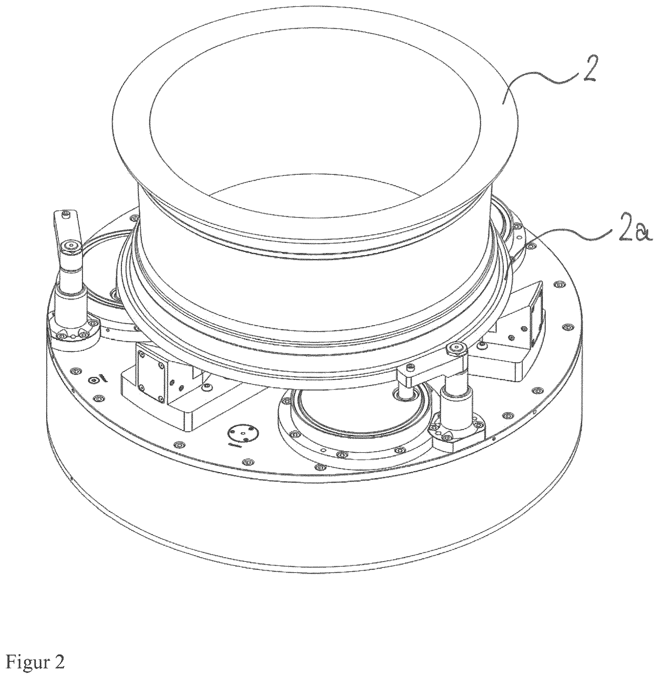

Nach Figur 1 umfasst ein allgemein mit 1 bezeichnetes Spannfutter für ein Rad (Figur 2) Zentriermittel 3A, 3B, 3C und Spannmittel 4A, 4B, 4C zur Zentrierung und zum Spannen gegen ein beliebiges Rad 2 aus einer Reihe von Rädern unterschiedlicher Größe. Die Zentriermittel 3A, 3B, 3C weisen dabei mehrere entlang des Umfangs verteilte, quer dazu an das Rad bewegliche Zentrierfinger 3A1, 3B1, 3C1 auf und die Spannmittel 4A, 4B, 4C weisen mehrere, das Rad im eingespannten Fall nach unten gegen die Spannfutterbasis pressende Spannfinger 4A1, 4B1, 4C1 auf und, Im Spannfall darunter mehrere, den Spannfingern 4A1, 4A2, 4A3 zugeordnete Auflagerbereiche 4A2, 4B2, 4C2, die der Unterstützung des Räderrandes (2A in Figur 2) gegen den Spannfingeranpressdruck dienen. Es ist eine Koppelung 6 vorhanden, die dazu ausgebildet ist, im Ansprechen auf die Zentrierung die Auflagerbereiche an den Räderrandbereich 2A an jener Stelle heranzuführen, wo der Räderrand gegen den Spannfingeranpressdruck zu unterstützen ist. Vorliegend ist diese Kopplung 6 als Kopplungsring bzw. als Kulissenscheibe gebildet, die bei eingespanntem zentrierten Rad parallel zu diesem liegt und koaxial dazu ist.

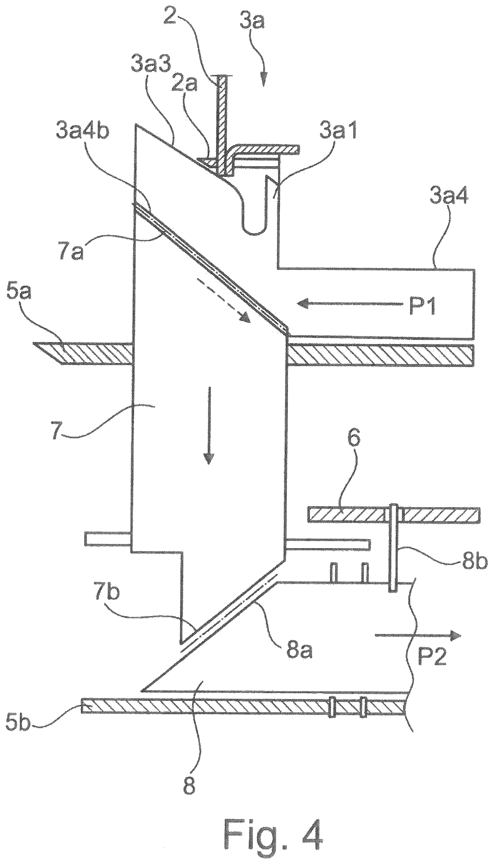

Das Spannfutter 1 ist im dargestellten Ausführungsfall von Figur 1 zum Spannen von Rädern dimensioniert, die eine Normgröße zwischen 15 und 21 Zoll Durchmesser besitzen. Wie durch die Pfeile 3A2, 3B2, 3C2 in Figur 1 angedeutet ist, sind die Zentrierfinger 3A1, 3A2, 3B1, 3C1 auf Gleitsschlitten angeordnet, die entlang der Spannfutterbasisplatte 5A radial nach innen gleiten können, wie insbesondere im Vergleich zwischen Figuren 1 und 2 erkennbar. Der Mechanismus, wie die allgemeine radiale Bewegung der Zentrierfinger bewirkt wird, wird weiter unten zunächst allgemein beschrieben werden, insbesondere mit Bezug auf Figur 4, bevor auf bestimmte konstruktive Details eingegangen wird.

Das Spannfutter 1 ist dazu ausgebildet und bestimmt, außerhalb einer Drehmaschine ein zu bearbeitendes Rad einzuspannen und dann mit dieser in den Bearbeitungsbereich einer Drehmaschine bewegt und dort auf einer Spindel befestigt zu werden, um dann in eine Rotation mit hinreichend hoher Geschwindigkeit versetzt zu werden. Das Spannfutter 1 ist im vorliegenden Ausführungsbeispiel ein pneumatisch betätigtes Spannfutter, wobei eine Kupplung zum Anschluss einer Druckluftquelle nicht in den Figuren dargestellt ist. Diese Kupplung ist so gebildet, dass nach Trennen der Verbindung zur Druckluftquelle ohne weitere Maßnahmen der an den verschiedenen Stellelementen angelegte pneumatische Druck bestehen bleibt.

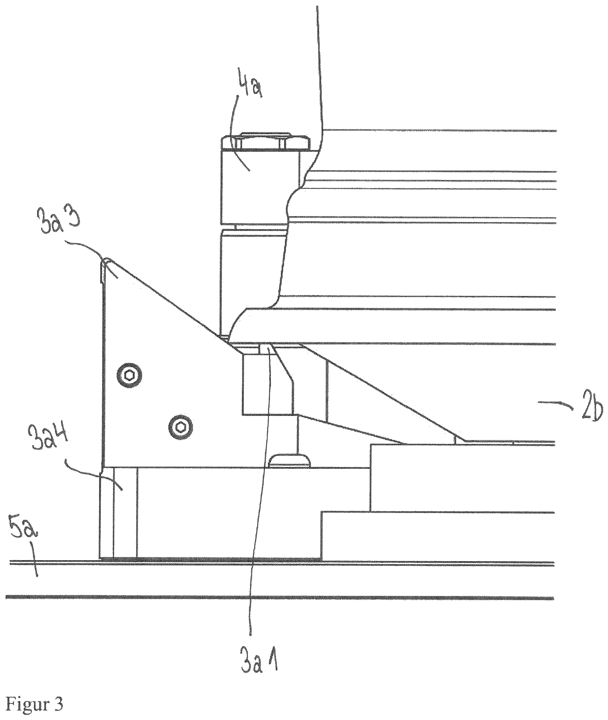

Das Rad 2 ist im vorliegenden Ausführungsbeispiel ein Rohrad, das aus Leichtmetall gegossen ist und den Spannrand 2A aufweist, der im Laufe der Bearbeitung noch zu entfernen ist. Das Rad hat eine von hier drei Normgrößen zwischen 15 und 21 Zoll Durchmesser. Sie weist eine Designüberhöhung durch zur Außenseite hin um hier bis zu 45 mm hervorstehende Speichen auf, vergleiche Figur 3, Bezugszahl 2B. Es sei darauf hingewiesen, dass es sich bei dem Rad 2 insoweit um ein Rohrad handelt, das noch fertig bearbeitet werden muss, und nicht etwa um ein fertiges Rad, auf welches ein Reifen aufzuziehen ist. Insofern ist das Spannfutter auch ein Spannfutter für die Rohräderbearbeitung und keine Vorrichtung zur Erleichterung des Aufziehens von Reifen. Die bekannten Aufziehhilfen für Reifen auf Räder wären auch für die vorliegenden Zwecke der Rohräderbearbeitung insoweit völlig ungeeignet, als das Aufziehen von Reifen auf Räder mit signifikant geringeren Drehzahlen erfolgt als die Rohräderbearbeitung. Zudem können die in Drehmaschinen wirkenden Kräfte größer werden als beim Aufziehen von Reifen.

Die Zentriermittel 3, die radial entlang der Spannfutterbasisplatte 5A beweglich sind, vergleiche die Pfeile 3A2, 3B2, 3C2, weisen Gleitflächen 3A3, 3B3, 3C3 zum Aufziehen des Rades auf, die radial außen höher über der Spannfutterbasisplatte 5A sind als radial weiter innen. Auf diesen Gleitflächen 3A3, 3B3, 3C3 wird das erst noch zu zentrierende und zu spannende Rad aufgesetzt; das Rad gleitet dann über diese Flächen, während sich die Gleitflächen unter dem Rad bewegen. Zur Verschleißverringerung können die Gleitflächen 3A3, 3B3, 3C3 gehärtet sein und/oder aus verschleißarmem, bevorzugt auch gegen Stöße beim Aufsetzen zu bearbeitender Räder unempfindlichem Material gebildet sein und/oder austauschbar sein. Die Gleitfläche 3A3, 3B3, 3C3 und die diese tragenden beweglichen Spannfutter-Komponenten können auch als Ablegekeile angesehen werden. Nahe des Endes der Gleitfläche 3A3, 3B3, 3C3, aber radial nach innen versetzt, sind die Zentrierfinger 3A1, 3B1 bzw. 3C1 angeordnet. Dabei ist jeder Zentrierfinger so gebildet, dass er von radial innen gegen den Räderrand 2A bewegt werden kann und ausreichend stabil, um unter dem durch die Pneumatikdruckquelle ausgeübten Pneumatikdruck in Anlage an den Räderrand nicht deformiert zu werden. Der Zentrierfinger ist so hoch über der Spannfutterbasisplatte 5A angeordnet, dass designüberhöhte Räder, z.B. mit Speichen, nirgends anstoßen. Die keilförmige Formgebung des zum Zentriermittel gehörenden Zentrierschlittens 3A4, 3B4, 3C4 trägt hierzu ebenfalls bei und ist daher vorteilhaft. Möglich sind im Ausführungsbeispiel etwa Räder mit Speichen, die vom Rand mit einem Winkel von z.B. bis zu 30° überhöht sind.

Figur 4 zeigt nun die prinzipielle Anordnung, mit welcher der Zentrierfinger 3A1 radial nach innen wie durch Pfeil P1 angedeutet bewegt werden kann. Der Zentrierfinger 3A1 ist Teil des Zentriermittels 3A, das sichtbar nach außen die Aufsetzfläche 3A3, sowie den Schlitten 3A4 aufweist, der parallel zur Spannfutterbasisplatte 5A gleiten kann. Am Schlitten 3A4 ist auf der Unterseite eine Gleitfläche 3A4B vorgesehen, die gegen die Spannfutterbasisplatte 5A geneigt ist, und zwar derart, dass sie an ihrem radial außen liegenden Ende weiter von der Spannfutterbasisplatte 5A ist als am radial weiter innen liegenden. Unterhalb dieser Gleitfläche 3A4B ist eine in die hohle Spannfutterbasis 5A eindringende Senk-Hebesäule 7 vorgesehen, die zum Schlitten 3A4 hin eine Gleitfläche 7A aufweist, welche an der Gleitfläche 3A4B anliegt und daran entlang gleiten kann. Die Senk-Hebesäule ist durch die Spannfutterbasisplatte 5A so geführt, dass sie sich in der Spannfutterbasisplatte nur heben und senken kann.

Auf ihrer Unterseite unterhalb der Spannfutterbasisplatte weist die Senk-Hebesäule eine weitere Gleitfläche 7B auf, mit welcher die Senk-Hebesäule 7 auf der Gleitfläche 8A eines Stempels 8 gleitet, welcher mit Druckfluidkraft radial nach innen bewegt werden kann, wie durch Pfeil P2 angedeutet. Hier dargestellt ist desweiteren, dass am Stempel 8 ein Mitnehmerfinger 8B angeordnet ist, der in die Ausnehmung 6A des Kopplungsringes 6 eindringt. Der Stempel 8 ist parallel zum Boden 5B des Spannfutters 5 beweglich. Es versteht sich, dass bei radialer Bewegung des Stempels 8 nach innen entlang des Pfeiles P2 die Senk-Hebesäule 7 mit ihrer Gleitfläche 7B auf der Gleitfläche 8A gleitet, wodurch sie in das Spannfutter absinkt, was zu einem Absinken auch der Gleitfläche 7A führt, gegen welche die Gleitfläche 3A4B gepresst wird, so dass der Schlitten 3A4 zur Aufrechterhaltung des Kontaktes zwischen der Gleitfläche 3A4B und der Gleitfläche 7A radial nach außen in Richtung des Pfeiles P1 gleiten wird, was dazu führt, dass ein lose auf der Auflagerfläche 3A3 aufliegendes Rad 2 auf der Auflagerfläche 3A nach unten gleitet, bis der Finger 3A1 das Rad innen ergreift und nach außen zieht. Da dies an allen Zentrierfingern der Fall sein wird, erfolgt eine gleichmäßige Zentrierung eines auf die Auflagerflächen 3A3, 3B3, 3C3 aufgesetzten Rades unter Herunterbewegen des Rades in Richtung auf die Spannfutterbasisplatte 5A.

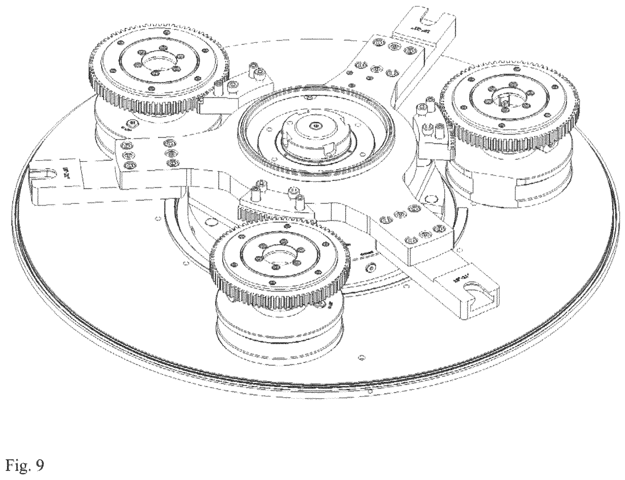

Die druckfluidkraftinduzierte Bewegung in Richtung des Pfeiles P2 beim Zentrieren (bzw. die ebenfalls druckfluidkraftinduzierte Bewegung in Gegenrichtung zu jener zum Zentrieren, also zur Freigabe des Rades) erfolgt dabei, indem ein Pin in einer Kulissenscheibe gleitet, die ihrerseits durch Auf- bzw. Ab-Bewegung eines Druckfluidkolbens und dem Gleiten eines Mitnehmerfingers in einer darin vorgesehenen spindelförmigen Gewindebahn in Rotation versersetzt wird. Dies sei genauer erläutert mit Bezug auf Figur 9.

Dabei zeigt Figur 9 einen zentralen, dreiarmigen Träger. Die drei Arme sind durch Bogensegmente verbunden, an welchen außen Zahnradsegmente angeordnet sind. Die eigentliche Kulissenscheibe wird auf diesen Träger aufgesetzt, ist aber nicht dargestellt. Nach Figur 9 sind nun mehrere Antriebe für die Kulissenscheibe um den Träger herum verteilt. Diese Antriebe umfassen jeweils ein erkennbares Zahnrad, das mit einem der Zahnradsegmente in Eingriff tritt. Diese Zahnräder werden pneumatische betätigt, indem ein Druckkolbenzylinder ausgefahren (bzw. bei Rückbewegung eingezogen) wird. Der Druckkolben ist dabei drehfest gehalten und weist an seiner Außenseite ein Spindelgewinde auf, in welches ein mit den Zahnrädern verbundener Finger eindringt, so dass der Hubkolben die Zahnräder in Rotation versetzt.

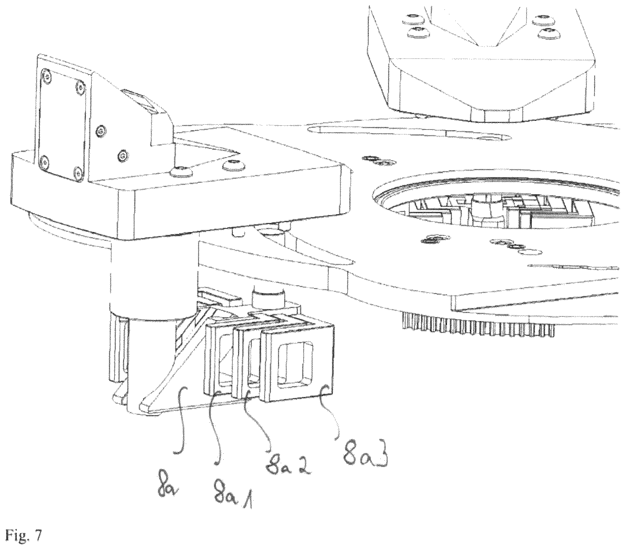

Es sind in Fig. 7, die weniger schematisch ist als Fig. 4, neben dem Element 8a mehrere Winkel erkennbar, die dicht hintereinander angeordnet sind und mit der Bewegung des Elements 8a radial nach innen mitgenommen werden können. Dabei tritt ein Winkel nach dem anderen in Eingriff mit dem Element 8a, wenn sich dieses radial nach innen bewegt. Solange diese Winkel nicht radial mit ihrer Schulter auf dem Element 8a bzw. den schon davon mitgenommenen kleineren Winkeln radial nach innen mitgenommen sind, sitzen sie jeweils abgestützt gegen Bewegung radial nach außen auf einer Auflagerung auf, die nicht dargestellt sind. Bei diesen Winkeln handelt es sich um Fliehgewichte, die so dimensioniert sind, dass das am nach innen bewegten Element 8a zumindest näherungsweise die gleichen Kräfte wirken wie am radial nach außen bewegten Zentrierfinger. Durch die zumindest partielle Kompensation der Fliehkräfte wird eine besonders weite Bewegung der Zentrierfinger ermöglicht, ohne dass die wirkenden Fliehkräfte, die erheblich je nach eingestelltem Radius variieren, störend wären. Auch sei erwähnt, dass im dargestellten Beispiel drei Fliehgewichte dargestellt sind; das gezeigte Spannfutter ist für vier unterschiedliche Raddurchmesser ausgelegt, so dass auch vier unterschiedlich großen Fliehkräften Rechnung getragen werden soll, was mit drei Fliehgewichten möglich ist.

Es sei betont, dass eine solche Mitnahme von Fliehgewichten an Spannfuttern insbesondere zur Verbesserung einer Selbsthemmung und zwar unabhängig vom Einspannen von Rädern, insbesondere aber dort, als besonders vorteilhaft angesehen wird, und, wenn auch für das Einspannen von Rädern als nicht zwingend, so doch allgemein als für sich erfinderisch betrachtet wird.

Durch die Drehung der Kulissenscheibe wird zugleich auch veranlasst, dass die kleinen Auflagerbereiche an die richtige Stelle gelangen und das Rad entsprechend fixiert werden kann. Dies wird erläutert mit Bezug auf die weiteren Figuren.

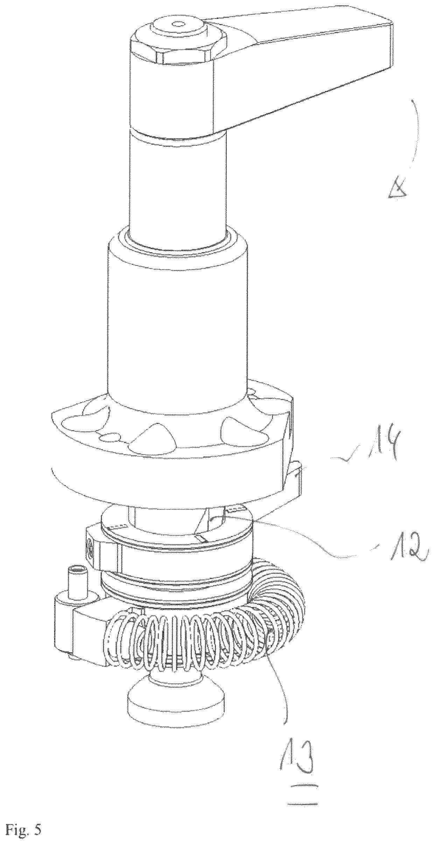

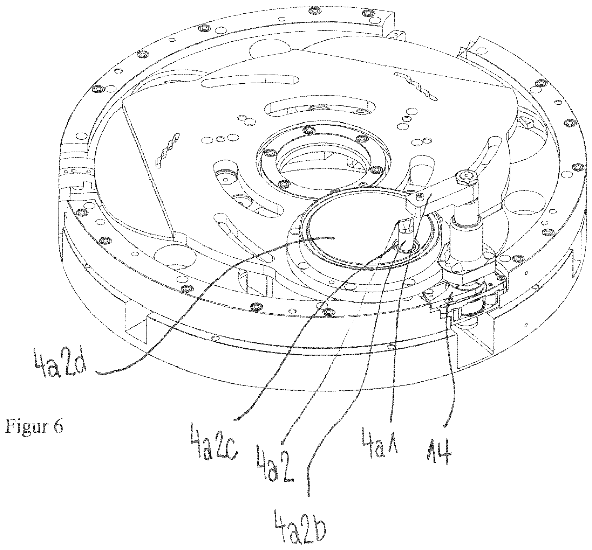

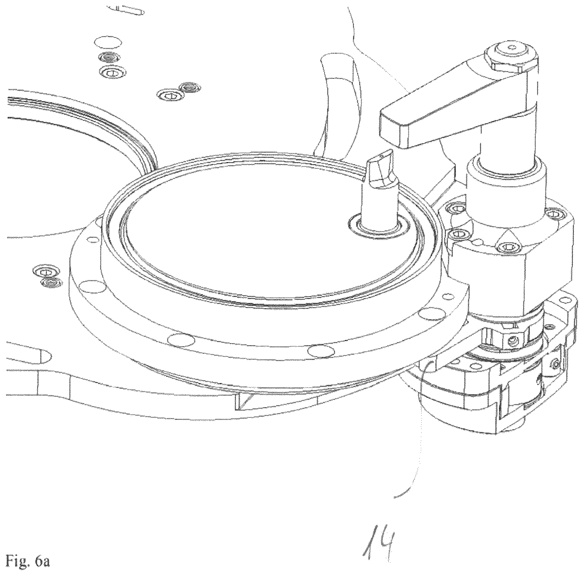

Fig. 6 und 6a zeigt in Draufsicht, wie sich die Auflagerfläche bewegen soll mit der Bewegung der Zentrierfinger; Figur 5 zeigt dabei im Detail den wie durch die beiden Pfeile in Figur 5 angedeutet nach innen und unten an der Spannfutterbasisplatte schwenkbar beweglichen Spannfinger 4A.

Durch die Schwenkbewegung des Spannfingers 4A, der an einer festen Stelle der Spannfutterbasis 5A montiert ist, folgt die Bewegung somit praktisch einer Kreisbahn. Die Bewegung des Spannfingers 4a nach unten kann dabei dadurch völlig unabhängig von der Schwenkbewegung des Spannfingers 4 gewählt werden, so dass der Spannfinger mit Rädern unterschiedlichen Profils in Eingriff treten kann. Der nach unten gerichtete Druck wird im dargestellten Ausführungsbeispiel durch eine Ziehscheibe erzeugt. die wie noch erläutert wird. ihrerseits hier pneumatisch druckfluidbetätigt ist.

Da parallel zur Spannfutterbasisplattenebene nur eine reine Spannfinger-Schwenkbewegung erfolgt, ist eindeutig festgelegt, an welche Stelle sich der Spannfinger über einen Räderspannrand bzw. einen Felgenhorn oder dergleichen gegebenen Durchmessers bewegen wird und demgemäß, wo er auf diesen aufdrückt. Es treten zwar noch kleine Variationen der Sollstelle durch kleine Schwankungen etwa des gegossenen Räderspannrandes auf, auf dem gespannt wird, von Rad zu Rad innerhalb einer (Klein-)Serie auf, die dazu führen, dass die SchwenkBewegung sehr geringfügig weiter oder kürzer ist. Diese Variationen sind aber in der Praxis ohne weiteres beherrschbar, wie beschrieben werden wird.

Damit ist die Schwenkbewegung letztlich sehr präzise bestimmt, was es ermöglicht, die Auflagerfläche 4A2 (bzw. für die Spannfinger 4B1, 4C1 die entsprechenden Auflagerfläche 4B2 bzw. 4C2) ordnungsgemäß zu positionieren.

Es sei erwähnt, dass eine gewisse Entkopplung von Schwenk- und Absenkbewegungen vorliegend leicht erreicht werden kann, obwohl die Dreh- bzw. Schwenkbewegung der Spannfinger per se konstruktiv einfach ermöglicht ist. Dies wird ersichtlich mit Bezug insbesondere auf die Figuren 5 und 11.

Figur 5 zeigt eine perspektivische Ansicht des Spannfingers, der mit einer Ziehscheibe angetrieben wird. Dabei wirkt auf eine Zylindersäule eine Zugkraft nach unten, die von der Ziehscheibe erzeugt wird.

Figur 11 zeigt diese Ziehscheibe, mit welcher die Spannfinger nach unten gezogen werden. Festzuhalten ist dabei zunächst, dass an der Ziehscheibe nur zentral nach unten gezogen wird im hier dargestellten Ausführungsbeispiel somit für alle drei Spannfinger ein gemeinsamer Aktor vorhanden ist. Um sicherzustellen, dass alle drei Spannfinger auch dann sicher ein Rohrad spannen, wenn dieses an den jeweiligen Stellen des Spannrandes, die unter die Spannfinger zu liegen kommen, unterschiedliche Dicken aufweist, ist die Ziehscheibe gegen die Achse des Rohrades neigbar. Dazu wird ein zentrales Gelenk vorgesehen, um das die Ziehscheibe neigbar gegen die Radachse ist. Zugleich sind, wie im Bereich der Spannfinger erkennbar, die Spannfingerunterseiten ballig geformt. Dies erlaubt eine Verkippung der gesamten Anordnung, um sich unterschiedlichen Höhen an den drei Kontaktstellen anzupassen. Zudem erlaubt die Verwendung nur eines einzigen Aktors eine leichte Überprüfung, ob überhaupt ein Rad eingespannt ist, bzw. ob es richtig eingespannt wurde.

Indem alle drei Spannfinger auf einer Platte montiert sind, werden also auch alle 3 Spannfinger gemeinsam nach unten gezogen. Die Verwendung von nur drei Spannfingern in Verbindung mit der Neigbarkeit der Ziehscheibe sorgt dafür, dass durch die leichte, zugelassene Neigung gegen die Radachse in jedem Fall alle 3 Spannfinger in Anlage an das zu spannende Rat gelangen können, auch wenn Höhenvariationen auftreten. Dass Einzelantriebe realisierbar wären, sei erwähnt. Der Vorteil einer nur an einer Stelle angetriebenen Ziehscheibe besteht in einer besseren Überprüfbarkeit des Spannvorganges und einem einfacheren und somit robusteren Aufbau. Alternativ wären aber mehrere Antriebe, z.B. als Einzelantriebe oder Gruppenantriebe realisierbar, insbesondere, wenn so große Rohräder gespannt werden sollen, dass die Verwendung von mehr als drei Spannfinger geboten ist.

Die Koppelung zwischen Absenken des Spannfingers und Einschwenken des Spannfingers gegen das Rad wird nun mit Bezug auf Fig. 5 beschrieben.

Fig. 5 zeigt, dass die starre Säule, an welcher der Spannfinger befestigt ist und welcher mit der Ziehscheibe nach unten bewegt wird, mit einer spiralartig umlaufenden Nut 12 versehen ist. Ein Finger greift in diese Nut. Der Finger ist an einem Feder-Element 13 angeordnet, das zunächst dafür sorgt, dass sich der Finger bei Abwärtsbewegung der Säule nicht um die Säule herumbewegen kann, so dass die Säule bei Ziehen der Ziehplatte nach unten einschwenkt (s. Pfeil). An die Säule ist ein Schwenkbegrenzungsfinger 14 gekoppelt, der im Inneren des Spannfutters auf einen Anschlag 15 trifft; dieser Anschlag 15 für Schwenkbegrenzungsfinger 14 in Fig. 6a und Fig. 10a gut zu erkennen. Der Spannfinger wird solange eingeschwenkt, bis der Schwenkbegrenzungsfinger in Anlage an seinen Anschlag gelangt.

Um danach ungeachtet der spiralartigen Nut die Säule weiter nach unten ziehen zu können, gibt dann das Federelement nach, an welchem der Finger befestigt ist. Mit anderen Worten läuft dieser Finger um die Säule in der Nut um, was die Schwenk- von der Senkbewegung entkoppelt, sobald der Spannfinger eingeschwenkt ist. Es kann so ein starkes Spannen erzielt werden. Sollte einer der Spannfinger vor den anderen in Eingriff treten, wird sich die Ziehplatte neigen. Damit treten alle Spannfinger in Eingriff mit der vorgesehenen Stelle am Rohrad über den jeweiligen Auflagerbereichen.

Figur 6 zeigt nun, dass die längliche Auflagerfläche 4A2, die dem Spannfinger 4A1 zugeordnet ist, an der Stirnfläche einer Säule 4A2B angeordnet ist. Die Säule 4A2B sitzt ihrerseits auf einer säulentragenden Basisplatte 4A2C, die drehbar in einer weiteren Platte 4A2D angeordnet ist, die wiederum drehbar in die Spannfutterbasisplatte eingelassen ist, also eine Zwischenplatte 4A2D darstellt. Es ist damit eine Überlagerung von zwei Drehbewegungen möglich, nämlich der Drehbewegung der säulentragenden Basisplatte 4A2C und der Zwischenplatte 4A2D. Dies kann ausgenutzt werden, um die Auflagerfläche in der Spannfutterbasisplatte 5A an eine gewünschte Stelle zu bewegen und dabei zugleich auszurichten.

Die Drehbewegung der säulentragenden Basisplatte 4A2C richtet hier auch die langgestreckte Auflagerfläche relativ zum Räderrand aus, wirkt also unmittelbar auch auf die Lage der darauf fest angeordneten Auflagerfläche 4A2. Diese Drehbewegung der säulentragenden Basisplatte 4A2C ist durch Pfeil D1 angedeutet. Die Drehbewegung der Zwischenplatte 4A2D, auf welcher die säulentragenden Basisplatte 4A2C drehbar angeordnet ist, ist mit Pfeil D2 angedeutet.

Die Auflagerfläche 4A2 kann also unter Drehung der größeren, in die Basisplatte eingelassenen Zwischenplatte 4A2D und der von dieser getragenen drehbaren säulentragenden Basisplatte 4A2C bewegt werden, wobei durch die Wahl von Länge der schwenkbaren Spannfinger und der Radien von Zwischenplatte und säulentragender Basisplatte eine geeignete Überlagerung der beiden Drehbewegungen von Zwischenplatte 4A2D und drehbarer säulentragender Basisplatte 4A2C es stets ermöglicht, die kleine Auflagerfläche 4A2 exakt unter jenen Punkt zu bewegen, an welchem der Spannfinger 4A von oben herunterdrückt.

Die Bahn 6B im Kopplungsring 6 ist so geformt, dass im Zusammenspiel mit der Bahn 6A, in welche der Ansatz 8B des Druckstempels 8 eindringt, um den Kopplungsring entsprechend der radialen Position des Druckstempels und somit des Zentriermittelschlitten zu bewegen, die Auflagerfläche 4A2 korrekt senkrecht zum Räderrand ausgerichtet und an jene Stelle bewegt wird, bei welcher der Spannfinger 4A1 entsprechend dem Radius aufsetzen wird. Dies lässt sich also durch die Form der Bahnen 6A und 6B erreichen. Zugleich bewirken die Haltepunkte eine geringere Bewegung bei den Normradien.

Dabei sei noch einmal darauf hingewiesen, dass durch (Dicken-)Variationen etwa der Räderspannrandbereite der Spannfinger zwar gelegentlich etwas weiter innen oder außen aufsetzen kann, die dadurch bedingten Variationen aber allenfalls und somit vernachlässigbar gering sind und zudem durch die bevorzugten länglichen Ausbildung der Auflagerfläche 4A2 vollständig kompensiert werden. Im Übrigen ist in Fig. 6 auch ein Auslassloch für Druckluft zu erkennen, das von einem ordnungsgemäß auflagernden Rad über deckt wird. Die ohne Rad ausströmende Luftmenge ist so groß gewählt, dass ein merklicher Druckabfall entsteht. Dies läßt sich zur Erfassung eines ordnungsgemäßen Radauflagerns verwenden.

Die Anordnung der Erfindung wird verwendet wie folgt:
Zunächst wird das Spannfutter an eine Druckfluidquelle angeschlossen und die Spannschlitten werden radial nach innen bewegt. Die Spannfinger werden dadurch weg von der Mitte in eine Position allgemein tangential zum hier als rund dargestellten Umfang des Spannfutters bewegt. Es sei darauf hingewiesen, dass diese Ausgangslage durch Beaufschlagen mit Druckfluid erfolgen kann, wenn gewünscht.

Es kann dann ein Rad auf die Aufsetzflächen 3A3, 3B3, 3C3 gesetzt werden. Dabei muss das Rad nicht exakt positioniert werden, sondern es muss nur Sorge dafür getragen werden, dass das Rad überhaupt auf diesen drei Aufsatzflächen aufsitzt. Dies erleichtert das Bestücken des Spannfutters mit Rädern, so dass dies entweder von Hand oder mit einfacher maschineller Unterstützung wie einem Knickarmroboter oder dergleichen geschehen kann.

Es wird dann zunächst durch Druckfluid die Kulissenscheibe gedreht und dadurch der Stempel 8 derart bewegt, dass sich die Stempel 8 in Figur 4 nach innen bewegen, was die Senk-Hebesäule 7 nach unten bewegt, wodurch der Schlitten 3A4 nach außen gleitet. Wie erforderlich, werden dabei im Spannfutterinneren die Fliehgewichte sukzessive mitgenommen.

Es sei noch einmal darauf hingewiesen, dass das Druckfluid nicht unmittelbar an die Stempel selbst angelegt wird, sondern der Stempel durch Kopplung an eine durch Druckfluidkraft in Drehung versetzte Kulissenscheibe bewegt wird.

Die Stempelbewegung führt, wie bereits angedeutet, einerseits zu einem Absinken des Rades auf die Aufsatzflächen 3A3, 3B3, 3C3, bis die Finger 3A1, 3B1, 3C1 jeweils am Räderrand angreifen. Je nach Aufsetzen des Rades wird dies nicht gleichzeitig an allen Zentrierfingern der Fall sein. Vielmehr wird das Rad erst in eine etwas besser zentrierte Lage durch Eingriff des ersten Zentrierfingers gezogen. Es folgt dann der Eingriff des zweiten Zentrierfinger, worauf der erste und der zweite eingreifende Zentrierfinger das Rad solange bewegen, bis sie auch in Eingriff mit dem dritten, sich übrigens ebenfalls bewegenden Zentrierfinger gerät.

Der Druck des hier pneumatischen Fluid ist dabei so gewählt, dass die Bewegung der Zentrierfinger bzw. der Zentrierfingerschlitten endet, sobald alle Zentrierfingern mit dem entsprechenden Abschnitt des Räderrandes in Eingriff getreten sind. Es versteht sich, dass bei zu großen Fluiddrücken gegebenenfalls eine Deformation auftreten könnte, was eindeutig unerwünscht, aber ohne weiteres zu vermeiden ist.

Zugleich mit der Bewegung der Stempel 8 durch die Bewegung des Fingers 8B im Kopplungsring bzw. der Kulissenscheibe 6 bewegt sich entlang der ihm zugeordneten Bahn, wenn der Kopplungsring zu einer Rotation um die Radachse veranlasst wird. Es wird einzuschätzen sein, dass für alle drei Zentrierfinger die entsprechende Ausnehmung 6A im Kopplungsring identisch sein wird. Die Bewegung der Kulissenscheibe bzw. des Kopplungsringes kann erfolgen wie mit Bezug auf Fig. 9 beschrieben.

Die Drehbewegung des Kopplungsringes führt dabei dazu, dass sich einerseits die langgestreckte rechteckige Auflagerfläche auf der Säule mit dieser zusammen dreht und andererseits auch ihre Position verändert. (Dass anstelle eines durchgehenden Ringes einleuchtenderweise auch mehrere, hinreichend lange Ringsegmente verwendbar wären, erschliesst sich dem Fachmann übrigens spätestens hier). Durch die Anpassung der Gleitbahnen 6A und 6B im Kopplungsring 6 gelangt jede Auflagerfläche exakt unter jene Stelle, an welcher der von oben auf die Rohrad aufgesetzte Spannfinger 4A nach unten pressen wird.

Im dargestellten Ausführungsbeispiel ist diese Spannfingerbewegung unabhängig von der Zentrierung und der Bewegung der Auflagerfläche und das eigentliche Spannen erfolgt nach Abschluss der Zentrierung. Dazu könnten zwar geeignete gesteuerte Druckfluidventile vorgesehen sein oder eine manuelle Steuerung erfolgen. Es sei insoweit darauf hingewiesen, dass eine solche vollständige Entkopplung von Zentrieren und Schwenken zwar das Verständnis und die Erläuterung der Abläufe vereinfacht, aber in der Praxis nicht notwendig ist und im Regelfall ohne weiteres eine zumindest simultan beginnende Schwenkbewegung der Spannfinger nach innen, Abwärtsbewegung der Spannfinger gegen das Rad, Zentrierung des Rades und Ausrichtung der Auflagerfläche möglich ist, falls gewünscht. Alternativ kann eine einfache Drucksteuerung die Abläufe zeitlich trennen. Da die Zentrierbewegung und die Schwenkbewegung aber ohnehin bis zum Rad führen und eine weitere Druckbeaufschlagung dabei nicht stört, reicht es jedoch z.B., den Spannfinger so langsam oder so spät abzusenken, dass das Rad bei Kontaktierung durch die Spannfinger stets bereits sicher zentriert und der Spannfinger bis in eine jeweilige Sollposition über das Rad eingeschwenkt ist, bevor der Spannfinger in Anlage auf das Rad gepresst wird. Wie dies mechanisch realisiert werden kann, wurde oben erläutert.

Damit reicht ein einzelner Druckluftzyklus zum Spannen und Zentrieren, was vorteilhaft ist. Die Anordnung kann also schnell und einfach spannen.

Nach Einschwenken aller Spannfinger und Absenken derselben gegen den Spannrand des zu bearbeitenden Rades wird die Druckfluidquelle vom Spannfutter abgekoppelt, wobei durch die in der Kupplung vorhandene Dichtung der Fluiddruck im Spannfutter erhalten bleibt. Das Rad ist also fest eingespannt und zentriert. Das Spannfutter mit dem eingespannten Rad kann nun in die Drehmaschine verbracht werden und dort ordnungsgemäß an der Spindel befestigt werden, worauf eine drehende Bearbeitung des Rades erfolgen kann.

Nach Abschluss der Bearbeitung kann das Spannfutter aus der Drehmaschine entfernt werden, das Rad umgedreht und von der anderen (bei später am Fahrzeug montiertem Rad: fahrzeugaußen liegenden) Seite bearbeitet werden.

Es sei darauf hingewiesen, dass während der ersten Bearbeitung des Rades Montagelöcher zur Befestigung des Rades an einer Achse vorgesehen werden können und gegebenenfalls demgemäß die Rad direkt an diesen unter Verwendung derselben angebracht werden kann, dies aber nicht zwingend ist.

Auch ist es möglich, das Rad evtl. einzuspannen und zu zentrieren, während sich das Spannfutter schon in der Drehmaschine befindet. Es wäre auch möglich, während des Spannens, Umdrehens etc. einem Rad an einem ersten Spannfutters mit der Drehmaschine ein zweites Rad auf einem zweiten Spannfutter zu bearbeiten:
Wie aus dem vorstehenden ersichtlich, kann das Spannfutter durch geeignete Dimensionierung für Räder unterschiedlicher Normgrößen ausgelegt werden, ist dabei aber kontinuierlich anpassbar.

Es sei betont, dass - wie aus dem vorstehenden ersichtlich- das Spannfutter vorteilhaft modular aufgebaut werden kann. Dies erlaubt auch, Spannfutter für unterschiedliche Normgrößen auszulegen.

Die Anzahl der erforderlichen Bauelemente kann durch die modulare Bauweise gering gehalten werden; dies gilt insbesondere dort, wo mehrere Spannfutter für jeweils unterschiedliche Gruppen an Rädergrößen benötigt werden. Zudem sind, wie aus dem vorstehenden ersichtlich, die Einzelkomponenten einfach, stabil und leicht herzustellen. Es kann insbesondere auf rein radiale Dichtungen an funktionalen Komponenten verzichtet werden und vielmehr an vielen Stellen auf Standardteile zurückgegriffen werden.

Zudem ist die Verwendung durch die rein pneumatische, in einem Zyklus erfolgende Betätigung und die durch die automatische Einstellung auf unterschiedliche Durchmesser vereinfachte Ablage der Räder auf dem Spannfutter sehr einfach, das System stabil auch bei hohen Drehgeschwindigkeiten und es wird eine konsistente und somit konsistent niedrige Bearbeitungshöhe für alle Rädergrößen gewährleistet.

Mit dem Spannfutter kann ein Rad beliebiger Größe aus einer Reihe unterschiedlicher Größen automatisch sehr schnell und überprüfbar eingespannt werden.

## Patentansprüche

1. Spannfutter (1) für Räder
mit Zentrier- (3A, 3B, 3C) und Spannmitteln (4A, 4B, 4C),
die dazu ausgebildet sind,
zur Zentrierung und zum Spannen
gegen ein beliebiges Rad (2)
aus einer Reihe von Rädern unterschiedlicher Größe bewegt zu werden,
wobei
die Zentriermittel (3A, 3B, 3C)
mehrere,
entlang des Umfangs verteilte,
quer dazu an das Rad bewegliche
Zentrierfinger (3A1, 3B1, 3C1) aufweisen,
die Spannmittel (4A, 4B, 4C)
mehrere,
das Rad (2)nach unten pressende
Spannfinger (4A1, 4B1, 4C1)
und unterhalb der Spannfinger
mehrere,
den Spannfingern zugeordnete,
zur kleinflächigen Unterstützung des Radrandes (2A) gegen den Spannfingeranpressdruck ausgebildete
Auflagerbereiche (4A2, 4B2, 4C2)
aufweisen,
**dadurch gekennzeichnet, dass**
eine Kopplung (6) vorhanden ist,
die dazu ausgebildet ist,
einhergehend mit der zur Zentrierung ausgeführten Bewegung der Zentrier-und Spannmittel
die Auflagerbereiche (4A2, 4B2, 4C2)
an den zu unterstützenden Räderrandbereich (2A) heran zu führen.

2. Spannfutter (1) nach dem vorhergehenden Anspruch, **dadurch gekennzeichnet, dass** die quer zum Umfang beweglichen Zentrierfinger (3A1, 3B1, 3C1) von innen nach außen beweglich sind, bevorzugt vollständig radial oder derart allgemein radial beweglich, dass der Winkel zwischen einer Bewegungsbahn eines Zentrierfingers (3A1, 3B1, 3C1) und der Tangente auf einen Umfang von einem rechten Winkel um nicht mehr als 10°, bevorzugt nicht mehr als 5° abweicht, wobei bevorzugt die Bewegungsbahn geradlinig ist.

3. Spannfutter (1) nach einem der vorhergehenden Ansprüche, **dadurch gekennzeichnet, dass** die entlang des Umfanges verteilten Zentrierfinger (3A1, 3B1, 3C1) in einem Winkelabstand von zwischen 15° und 120° zueinander angeordnet sind, bevorzugt äquidistant und/oder um nicht mehr als 3° abweichend äquidistant.

4. Spannfutter (1) nach einem der vorhergehenden Ansprüche, **dadurch gekennzeichnet, dass** zumindest ein Teil der beweglichen Elemente dazu ausgebildet ist, bevorzugt zumindest die Zentrierfinger (3A1, 3B1, 3C1), durch Druckfluid, bevorzugt pneumatisch durch Druckluft, bewegt zu werden, wobei bevorzugt eine Kupplung für den Anschluss einer Pneumatik-Fluidquelle vorhanden ist, wobei bevorzugt der Kupplung eine Dichtung zugeordnet ist, um ein im Spannfutter (1) unter Druck stehendes Fluid nach Abkoppelung von der Fluiddruckquelle gegen Austreten zu sichern.

5. Spannfutter (1) nach einem der vorhergehenden Ansprüche, **dadurch gekennzeichnet, dass** die Spann- und Zentriermittel (3A, 3B, 3C, 4A, 4B, 4C) dazu ausgebildet sind, gegen ein Rad (2) aus einer Reihe von Rädern zumindest 3, bevorzugt 4 unterschiedlich genormter Durchmesser bevorzugt zwischen 15 und 24 Zoll bewegt zu werden.

6. Spannfutter (1) nach einem der vorhergehenden Ansprüche, **dadurch gekennzeichnet, dass** die Zentrierfinger (3A1, 3B1, 3C1) nahe des Endes von nach radial innen abfallend geneigten Ablegekeilen angeordnet sind, die so beweglich und geformt sind, dass die Räderablagehöhe stets bei Zentrierung erreicht wird, wobei sie bevorzugt durch Bewegung von mit zwei entgegengesetzt geneigten Gleitflächen (3A3, 3B3, 3C3) gebildeten Gleitflächenpaaren versehenden Senk- Hebesäulen beweglich sind.

7. Spannfutter (1) nach einem der vorhergehenden Ansprüche, **dadurch gekennzeichnet, dass** die Auflagerbereiche (4A2, 4B2, 4C2) als Flächen eine Größe von nicht mehr als 15 mm x 15 mm,
bevorzugt nicht mehr als 5 mm x 10 mm aufweisen
und/oder
das Spannfutter (1) mit einer Basisplatte (5A) gebildet ist, wobei die Auflagerbereiche (4A2, 4B2, 4C2) so hoch über der Basisplatte angeordnet sind, dass auch ein designüberhöhtes Rohrad die Basisplatte nicht radial innen der Auflagerbereiche berührt.

8. Spannfutter (1) nach einem der vorhergehenden Ansprüche, **dadurch gekennzeichnet, dass** je Spannfinger ein Auflagebereich (4A2, 4B2, 4C2) vorgesehen ist.

9. Spannfutter (1) nach einem der vorhergehenden Ansprüche, **dadurch gekennzeichnet, dass** die Auflagerbereiche (4A2, 4B2, 4C2) im Spannfall unmittelbar unter oder allenfalls mit einem Versatz nicht größer als 1/100, bevorzugt nicht größer als 1/200, des Abstandes der Spannfinger zueinander unter den nach unten beweglichen Spannfingern angeordnet sind.

10. Spannfutter (1) nach einem der vorhergehenden Ansprüche, **dadurch gekennzeichnet, dass** die Kopplung (6) eine mechanische Kopplung ist und/oder die Kopplung dazu ausgebildet ist, die Spann und/oder Zentriermittel und/oder Auflagerbereiche (4A2, 4B2, 4C2) unter Absenken des Rades (2A) auf die Auflager und/oder Drehen des Auflagerbereiches (4A2, 4B2, 4C2) an eine gewünschte Stelle zu bewegen.

11. Spannfutter (1) nach einem der vorhergehenden Ansprüche, **dadurch gekennzeichnet, dass** die Auflagerbereiche (4A2, 4B2, 4C2) am oberen Ende einer Säule mit Achse allgemein senkrecht zu einer Basisplatte (5) vorgesehen sind und/oder drehbar zu einer drehbaren Platte und bevorzugt zusätzlich allgemein senkrecht auf die Basisplatte angeordnet ist.

12. Spannfutter (1) nach einem der vorhergehenden Ansprüche, **dadurch gekennzeichnet, dass** die Auflagerbereiche (4A2, 4B2, 4C2) an die Zentrierfinger (4A, 4B, 4C) und deren Zentrierfingerbewegung durch einen Koppelring bzw. eine Kulissenscheibe gekoppelt sind.

13. Spannfutter (1) nach einem der vorhergehenden Ansprüche, **dadurch gekennzeichnet, dass** zumindest einem Zentrierfinger (4A, 4B, 4C) wenigstens ein Fliehgewicht zugeordnet ist, das bevorzugt abhängig von der radialen Zentrierfingerpositionierung aus einer Ruheposition in eine aktive Position bewegt wird.

14. Spannfutter (1) nach einem der vorhergehenden Ansprüche,
**dadurch gekennzeichnet, dass**
das Spannfutter (1) für pneumatische Betätigung ausgebildet ist, wobei
wenigstens in einem Auflagerbereich eine Druckfluid-Auslass-Öffnung so angeordnet ist, dass, wenn ein Rohrad bzw. dessen Spannrand ordnungsgemäß aufliegt, die Öffnung überdeckt ist, und ein Druckluftentweichen aus der überdeckten Öffnung in allenfalls minimalem Umfang möglich ist,
wohingegen bei nicht ordnungsgemäß überdeckter Öffnung Druckluft so entweichen kann,
dass ein bei Fehlauflage auftretender Druckverlust eines an das Spannfutter angelegten Druckfluiddrucks erkennbar und das Spannen mangelhaft zentrierter Räder im Ansprechen darauf verhinderbar ist.

## Claims

1. Collet chuck (1) for wheels
with centering means (3A, 3B, 3C) and clamping means (4A, 4B, 4C)
which are configured
to be moved
against any wheel (2)
out of a series of wheels having different sizes
for centering and for clamping,
wherein
the centering means (3A, 3B, 3C)
comprise
a plurality of
centering fingers (3A1, 3B1, 3C1)
which are distributed along the circumference
and movable in a cross direction thereto towards the wheel,
the clamping means (4A, 4B, 4C)
comprise
a plurality of
clamping fingers (4A1, 4B1, 4C1)
pressing the wheel (2) downwards,
and, below the clamping fingers,
a plurality of
support areas (4A2, 4B2, 4C2)
which are assigned to the clamping fingers and
configured to support the wheel edge (2A) in a small area against the clamping finger pressing force,
**characterized in that**
a coupling (6) is provided
which is configured to move,
along with the movement of the centering and clamping means performed for centering,
the support areas (4A2, 4B2, 4C2)
towards the wheel edge area (2A) to be supported.

2. The collet chuck (1) according to the preceding claim, **characterized in that** the centering fingers (3A1, 3B1, 3C1) that are movable in a cross direction relative to the circumference are movable from the inside to the outside, preferably completely radially or in such a general manner radially that the angle between a movement path of a centering finger (3A1, 3B1, 3C1) and the tangent to a circumference differs from a right angle by not more than 10°, preferably not more than 5°, wherein preferably the movement path is rectilinear.

3. The collet chuck (1) according to any one of the preceding claims, **characterized in that** the centering fingers (3A1, 3B1, 3C1) distributed along the circumference are arranged at an angular distance of between 15° and 120° relative to each other, preferably equidistantly and/or equidistantly in a manner not deviating by more than 3°.

4. The collet chuck (1) according to any one of the preceding claims, **characterized in that** at least a part of the movable elements, preferably at least the centering fingers (3A1, 3B1, 3C1), is configured to be moved by a pressurized fluid, preferably pneumatically by pressurized air, wherein preferably a coupling for connecting a pneumatic fluid source is provided, wherein preferably a seal is assigned to the coupling in order to prevent a fluid pressurized in the collet chuck (1) from leaking after decoupling from the fluid pressure source.

5. The collet chuck (1) according to any one of the preceding claims, **characterized in that** the clamping and centering means (3A, 3B, 3C, 4A, 4B, 4C) are configured to be moved against a wheel (2) out of a series of wheels having at least 3, preferably 4 differently standardized diameters, preferably between 15 and 24 inches.

6. The collet chuck (1) according to any one of the preceding claims, **characterized in that** the centering fingers (3A1, 3B1, 3C1) are arranged close to the end of radially inwardly sloping inclined support wedges which are movable and shaped in such a manner that the wheel support height is always reached upon centering, wherein they are preferably movable by movement of lifting and lowering columns having pairs of sliding surfaces formed by two oppositely sloping sliding surfaces (3A3, 3B3, 3C3).

7. The collet chuck (1) according to any one of the preceding claims, **characterized in that** the support areas (4A2, 4B2, 4C2) have, as surfaces, a size of not more than 15 mm x 15 mm,
preferably not more than 5 mm x 10 mm,
and/or
the collet chuck (1) is formed with a base plate (5A), wherein the support areas (4A2, 4B2, 4C2) are arranged so high above the base plate that also a raw wheel having a raised design does not contact the base plate radially inside of the support areas.

8. The collet chuck (1) according to any one of the preceding claims, **characterized in that** one support area (4A2, 4B2, 4C2) is provided for each clamping finger.

9. The collet chuck (1) according to any one of the preceding claims, **characterized in that**, in the case of clamping, the support areas (4A2, 4B2, 4C2) are arranged directly under or at the most with an offset of not more than 1/100, preferably not more than 1/200, of the distance of the clamping fingers relative to one another under the downwardly movable clamping fingers.

10. The collet chuck (1) according to any one of the preceding claims, **characterized in that** the coupling (6) is a mechanical coupling and/or the coupling is configured to move the clamping and/or centering means and/or support areas (4A2, 4B2, 4C2) to a desired place by lowering the wheel (2A) to the supports and/or rotating the support area (4A2, 4B2, 4C2).

11. The collet chuck (1) according to any one of the preceding claims, **characterized in that** the support areas (4A2, 4B2, 4C2) are provided at the upper end of a column with an axis generally perpendicular with respect to a base plate (5) and/or arranged rotatably with respect to a rotatable plate and preferably additionally generally perpendicular with respect to the base plate.

12. The collet chuck (1) according to any one of the preceding claims, **characterized in that** the support areas (4A2, 4B2, 4C2) are coupled to the centering fingers (4A, 4B, 4C) and their centering finger movement by a coupling ring or connecting disk.

13. The collet chuck (1) according to any one of the preceding claims, **characterized in that** at least one centrifugal weight is assigned to at least one centering finger (4A, 4B, 4C), said centrifugal weight being moved, preferably dependent on the radial centering finger position, from a rest position into an active position.

14. The collet chuck (1) according to any one of the preceding claims,
**characterized in that**
the collet chuck (1) is configured for pneumatic actuation, wherein
at least in one support area, a pressure fluid outlet opening is arranged in such a manner that when a raw wheel or its clamping edge is supported properly, the opening is covered and pressurized air can escape from the covered opening at the most to a minimum extent,
whereas in case the opening is not covered properly, pressurized air can escape in such a manner that a pressure loss of a pressurized fluid pressure applied to the collet chuck, which occurs in case of an improper support, is noticeable and the clamping of inadequately centered wheels can be prevented as a consequence thereof.

## Revendications

1. Mandrin de serrage (1) pour roues comportant des moyens de centrage (3A, 3B, 3C) et de serrage (4A, 4B, 4C) conçus pour être déplacés en vue du centrage et du serrage contre une roue (2) donnée d'une série de roues de tailles différentes,
dans lequel les moyens de centrage (3A, 3B, 3C) présentent une pluralité de doigts de centrage (3A1, 3B1, 3C1) mobiles transversalement par rapport à la roue et répartis circonférentiellement sur celle-ci, les moyens de serrage (4A, 4B, 4C) présentent une pluralité de doigts de serrage (4A1, 4B1, 4C1) pressant la roue (2) vers le bas et, en dessous des doigts de serrage, une pluralité de zones de support (4A2, 4B2, 4C2) associées aux doigts de serrage pour le support sur des surfaces restreintes du bord de roue (2A) contre la pression de contact des doigts de serrage,
**caractérisé en ce qu'**un accouplement (6) est prévu, lequel est conçu pour, conjointement avec le mouvement des moyens de centrage et de serrage exécuté pour le centrage, placer les zones de support (4A2, 4B2, 4C2) contre la zone de bord de roue (2A) à soutenir.

2. Mandrin de serrage (1) selon la revendication précédente, **caractérisé en ce que** les doigts de centrage (3A1, 3B1, 3C1) mobiles transversalement par rapport à la circonférence sont mobiles de l'intérieur vers l'extérieur, de préférence mobiles de manière entièrement radiale ou globalement radiale de sorte que l'angle entre une trajectoire d'un doigt de centrage (3A1, 3B1, 3C1) et la tangente marque sur une circonférence un écart par rapport à un angle droit n'excédant pas 10°, de préférence n'excédant pas 5°, dans lequel la trajectoire est de préférence rectiligne.

3. Mandrin de serrage (1) selon l'une des revendications précédentes, **caractérisé en ce que** les doigts de centrage (3A1, 3B1, 3C1) répartis le long de la circonférence sont disposés à une distance angulaire comprise entre 15° et 120° les uns par rapport aux autres, de préférence de manière équidistante et/ou équidistante avec un écart n'excédant pas 3°.

4. Mandrin de serrage (1) selon l'une des revendications précédentes, **caractérisé en ce qu'**au moins une partie des éléments mobiles, de préférence au moins les doigts de centrage (3A1, 3B1, 3C1), est conçue pour être déplacée par un fluide sous pression, de préférence de manière pneumatique par air comprimé, dans lequel de préférence un couplage est prévu pour raccorder une source de fluide pneumatique, dans lequel un joint d'étanchéité est de préférence associé au couplage pour sécuriser un fluide se trouvant sous pression dans le mandrin de serrage (1) après le découplage de la source de pression de fluide contre les fuites.

5. Mandrin de serrage (1) selon l'une des revendications précédentes, **caractérisé en ce que** les moyens de serrage et de centrage (3A, 3B, 3C, 4A, 4B, 4C) sont adaptés pour être déplacés contre une roue (2) d'une série de roues ayant au moins 3, de préférence 4 diamètres normalisés différents, mesurant de préférence entre 15 et 24 pouces.

6. Mandrin de serrage (1) selon l'une des revendications précédentes, **caractérisé en ce que** les doigts de centrage (3A1, 3B1, 3C1) sont disposés à proximité de l'extrémité de cales inclinées radialement vers le bas et vers l'intérieur, lesquelles sont mobiles et formées de sorte que la hauteur du plateau de roue est toujours atteinte lors du centrage, dans lequel elles peuvent de préférence être déplacées grâce au mouvement de colonnes d'abaissement et de levage équipant des paires de surfaces de glissement constituées de deux surfaces de glissement (3A3, 3B3, 3C3) inclinées de manière opposée.

7. Mandrin de serrage (1) selon l'une des revendications précédentes, **caractérisé en ce que** les zones de support (4A2, 4B2, 4C2) en tant que surfaces présentent une dimension n'excédant pas 15 mm x 15 mm,
de préférence n'excédant pas 5 mm x 10 mm
et/ou
le mandrin de serrage (1) est formé avec une plaque de base (5A), dans lequel les zones de support (4A2, 4B2, 4C2) sont agencées à une certaine hauteur au-dessus de la plaque de base de sorte qu'une roue tubulaire conçue de manière surélevée ne touche pas non plus la plaque de base radialement vers l'intérieur des zones de support.

8. Mandrin de serrage (1) selon l'une des revendications précédentes, **caractérisé en ce qu'**une zone de support (4A2, 4B2, 4C2) est prévue pour chaque doigt de serrage.

9. Mandrin de serrage (1) selon l'une des revendications précédentes, **caractérisé en ce que** les zones de support (4A2, 4B2, 4C2), en cas de serrage, sont disposées immédiatement, ou dans tous les cas, à raison d'un décalage n'excédant pas 1/100, de préférence n'excédant pas 1/200, de la distance entre les doigts de serrage, en dessous des doigts de serrage mobiles vers le bas.

10. Mandrin de serrage (1) selon l'une des revendications précédentes, **caractérisé en ce que** le couplage (6) est un couplage mécanique et/ou que le couplage est conçu pour déplacer à un emplacement souhaité les moyens de serrage et/ou de centrage et/ou les zones de support (4A2, 4B2, 4C2) en cas d'abaissement de la roue (2A) sur les supports et/ou de rotation de la zone de support (4A2, 4B2, 4C2).

11. Mandrin de serrage (1) selon l'une des revendications précédentes, **caractérisé en ce que** les zones de support (4A2, 4B2, 4C2) sont prévues à l'extrémité supérieure d'une colonne avec un axe généralement perpendiculaire à une plaque de base (5) et/ou disposées de manière rotative par rapport à une plaque rotative et de préférence également généralement perpendiculaire sur la plaque de base.

12. Mandrin de serrage (1) selon l'une des revendications précédentes, **caractérisé en ce que** les zones de support (4A2, 4B2, 4C2) sont couplées aux doigts de centrage (4A, 4B, 4C) et à leur mouvement de doigts de centrage grâce à une bague d'accouplement ou à une plaque coulissante.

13. Mandrin de serrage (1) selon l'une des revendications précédentes, **caractérisé en ce qu'**au moins un doigt de centrage (4A, 4B, 4C) est associé à au moins une masselotte qui est déplacée, de préférence en fonction du positionnement radial des doigts de centrage, d'une position de repos à une position active.

14. Mandrin de serrage (1) selon l'une des revendications précédentes,
**caractérisé en ce que**
le mandrin de serrage (1) est conçu pour un actionnement pneumatique, dans lequel,
une ouverture de sortie de fluide sous pression est disposée au moins dans une zone de support de sorte que, lorsqu'une roue tubulaire ou son bord de serrage est correctement posé(e), l'ouverture est recouverte, et une sortie d'air comprimé provenant de l'ouverture recouverte est possible dans une mesure minimale dans tous les cas,
de l'air comprimé pouvant en revanche s'échapper lorsque l'ouverture n'est pas correctement recouverte,
de sorte qu'une perte de pression d'une pression de fluide sous pression appliquée au mandrin de serrage survenant en cas de mauvais positionnement peut être détectée et le serrage des roues centrées de manière insuffisante peut être empêché en réponse à cela.
